# EUROPÄISCHE PATENTANMELDUNG

(11) **EP 4 088 854 A1**
(43) Veröffentlichungstag der Anmeldung: **16.11.2022**
(21) Anmeldenummer: 22168848.4
(22) Anmeldetag: 19.04.2022
(51) Int. Cl.: B23K 26/03, B23K 26/60, B23K 26/70, B23K 31/12

(54) **VERFAHREN ZUM VERGLEICHEN VON LASERBEARBEITUNGSSYSTEMEN UND VERFAHREN ZUM ÜBERWACHEN EINES LASERBEARBEITUNGSPROZESSES SOWIE DAZUGEHÖRIGES LASERBEARBEITUNGSSYSTEM**

(30) Priorität: 19.04.2021 DE 102021109787
(71) Anmelder: Precitec GmbH & Co. KG, 76571 Gaggenau-Bad Rotenfels (DE)
(72) Erfinder: Boco, Attila, 76571 Gaggenau (DE); Staudenmaier, Florian, 76199 Karlsruhe (DE); Spoerl, Georg, 76287 Rheinstetten (DE); Strebel, Matthias, 76571 Gaggenau (DE)
(74) Vertreter: Ter Meer Steinmeister & Partner

(57) **Zusammenfassung**

Es ist ein Verfahren zum Vergleichen von Laserbearbeitungssystemen angegeben, wobei ein Laserbearbeitungssystem einen Laserbearbeitungskopf und ein Sensormodul mit zumindest einer Photodiode umfasst, das Verfahren umfassend: Detektieren von Strahlung, die von einer Lichtquelle emittiert wird, durch die Photodiode und Erzeugen eines entsprechenden Intensitätssignals, wobei die Strahlung von der Lichtquelle zur Photodiode durch zumindest ein optisches Element im Laserbearbeitungskopf und/oder von zumindest einem optischen Element des Sensormoduls geführt wird; Ausrichten des Laserbearbeitungskopfes und der Lichtquelle zueinander, sodass das Intensitätssignal einen Maximalwert annimmt; und Vergleichen des Intensitätssignals mit zumindest einem vorgegebenen Referenzwert. Ferner ist ein Verfahren zum Überwachen eines Laserbearbeitungsprozesses und ein dazugehöriges Laserbearbeitungssystem angegeben.

## Beschreibung

Die Erfindung betrifft ein Verfahren zum Vergleichen von Laserbearbeitungssystemen bzw. von Komponenten eines oder mehrerer Laserbearbeitungssysteme, und ein Verfahren zum Überwachen eines Laserbearbeitungsprozesses sowie ein Laserbearbeitungssystem, das zum Durchführen dieser Verfahren eingerichtet ist.

### Hintergrund und Stand der Technik

In einem Laserbearbeitungssystem, auch als Laserbearbeitungsanlage oder kurz Anlage bezeichnet, wird zur Bearbeitung eines Werkstücks der von einer Laserstrahlquelle oder einem Ende einer Laserleitfaser austretende Laserstrahl mit Hilfe von Strahlführungsoptiken auf ein zu bearbeitendes Werkstück fokussiert, um das Werkstück lokal auf Schmelztemperatur zu erhitzen. Zu den Strahlführungsoptiken zählen beispielsweise eine Fokussieroptik, ein Strahlteiler, eine Ablenkeinheit etc.. Die Bearbeitung kann ein Laserschweißen oder ein Laserschneiden umfassen. Das Laserbearbeitungssystem kann einen Laserbearbeitungskopf, beispielsweise einen Laserschweißkopf oder einen Laserschneidkopf, umfassen. Der Laserbearbeitungsprozess kann einen Laserschweißprozess und einen Laserschneidprozess umfassen.

Um die Qualität der Bearbeitung zu sichern, ist es wichtig, den Laserbearbeitungsprozess zu überwachen. Die Überwachung erfolgt typischerweise durch Detektieren und Auswerten einer während des Laserbearbeitungsprozesses entstehenden Prozessstrahlung, auch Prozesslicht oder Prozessemissionen genannt. Die Prozessstrahlung umfasst die von dem Werkstück zurückgestreute oder zurückreflektierte Laserstrahlung, Prozessemissionen im infraroten Wellenlängenbereich des Lichts, wie Temperaturstrahlung, und Prozessemissionen im sichtbaren Wellenlängenbereich des Lichts, wie Strahlung eines durch die Bearbeitung entstehenden Plasmas.

Das Detektieren der Prozessstrahlung erfolgt typischerweise durch zumindest einen Sensor, beispielsweise eine Photodiode. Der Sensor erfasst eine Intensität der Prozessstrahlung bei einer vorgegebenen Wellenlänge oder in einem vorgegebenen Wellenlängenbereich und erzeugt ein entsprechendes Intensitätssignal. Zur Überwachung wird das Intensitätssignal beispielsweise mit vorgegebenen Hüllkurven und/oder Schwellwerten verglichen und es wird ein Fehler ausgegebenen, wenn das Intensitätssignal außerhalb der Hüllkurven liegt oder einen Schwellwert über- oder unterschreitet.

Beim Laserschweißen werden üblicherweise Überwachungssysteme eingesetzt, die mit der vom Prozess zurückgestrahlten Strahlung (Prozessstrahlung) eine qualitative Aussage über die Güte einer Schweißnaht wiedergeben können. Der Anteil der Strahlung, der vom Prozess in das Überwachungssystem rückgekoppelt wird, ist maßgeblich abhängig von den beteiligten Komponenten und deren Qualität. Dabei kann es durch Herstellungstoleranzen und Qualitätsschwankungen von optischen und/oder mechanischen Komponenten des Laserbearbeitungssystems und/oder des Überwachungssystems zu großen Unterschieden in den entsprechenden Signalbereichen kommen. Beispielsweise können baugleiche bzw. identische Ablenkeinheiten, Scanner, oder optische Elemente des Laserbearbeitungskopfes, wie Linsen, Spiegel, etc., aufgrund von Herstellungstoleranzen unterschiedliche Eigenschaften aufweisen. Auch Herstellungstoleranzen bei Photodioden können zu Unterschieden in der erfassten Prozessstrahlung führen. Entsprechende Intensitätssignale können sich also bei baugleichen Laserbearbeitungssystemen unterscheiden. Beispielsweise können sich mittlere Signalniveaus, auch als Signalpegel bezeichnet, der Intensitätssignale unterscheiden.

Diese Unterschiede zwischen den Intensitätssignalen machen einen Vergleich von gleichartigen oder baugleichen Anlagen schwierig oder unmöglich. Zudem können zur Überwachung eines vorgegebenen Laserbearbeitungsprozesses an gleichartigen oder baugleichen Laserbearbeitungssystemen nicht dieselben Überwachungsparameter wie Hüllkurven oder Schwellwerte verwendet werden. Auch ist die Erkennung von Fehlern des Laserbearbeitungsprozesses nicht mehr sichergestellt. Insbesondere in der industriellen Serienfertigung kommen in der Regel mehrere baugleiche Anlagen zum Einsatz, wobei die Vergleichbarkeit bei der Auswertung der Intensitätssignale eine immer größere Rolle spielt. Demnach ist ein aussagekräftiger und stabiler Vergleich der Strahlführungseigenschaften von baugleichen Anlagen erforderlich, um eine hohe Qualität der Prozessüberwachung zu ermöglichen.

### Offenbarung der Erfindung

Es ist eine Aufgabe der vorliegenden Offenbarung, ein Verfahren anzugeben, durch das mehrere gleichartige bzw. baugleiche Laserbearbeitungssysteme, insbesondere Komponenten von Laserbearbeitungssystemen, vergleichbar werden.

Es ist weiter eine Aufgabe der vorliegenden Offenbarung, ein Verfahren anzugeben, durch das Eigenschaften, insbesondere Strahlführungs- und/oder Detektionseigenschaften mehrerer baugleicher Laserbearbeitungssysteme, insbesondere von den darin umfassten Sensormodulen und/oder Laserbearbeitungsköpfen, vergleichbar werden.

Es ist zudem eine Aufgabe der Erfindung, ein Verfahren anzugeben, durch das Eigenschaften, insbesondere Strahlführungs- und/oder Detektionseigenschaften, eines vorgegebenen Laserbearbeitungssystems zu verschiedenen Zeitpunkten vergleichbar werden.

Es ist ferner eine Aufgabe der vorliegenden Offenbarung, ein Verfahren anzugeben, mit dem die Überwachung von identischen Laserbearbeitungsprozessen, die durch gleichartige oder baugleiche Laserbearbeitungssysteme mit identischen Prozessparametern durchgeführt werden, mit identischen Überwachungsparametern ermöglicht wird.

Es ist ferner eine Aufgabe der vorliegenden Offenbarung, ein Laserbearbeitungssystem anzugeben, welches eingerichtet ist, um derartige Verfahren durchzuführen.

Eine oder mehrere dieser Aufgaben werden gelöst durch den Gegenstand der unabhängigen Ansprüche. Vorteilhafte Ausgestaltungen und Weiterbildungen sind Gegenstand abhängiger Ansprüche.

Die Erfindung beruht auf dem Gedanken, durch einen Sensor, insbesondere durch einen photodiodenbasierten Sensor, eines Sensormoduls eines Laserbearbeitungssystems die Strahlungsintensität einer von einer Lichtquelle emittierten Strahlung zu detektieren und darauf basierend ein Intensitätssignal zu erzeugen. Die Strahlung wird hierbei zwischen der Strahlungsquelle und der Photodiode von zumindest einem optischen Element des Laserbearbeitungskopfes und/oder des Sensormoduls geführt. Das Führen kann ein Reflektieren und/oder Transmittieren der Strahlung mittels des optischen Elements umfassen. Die Strahlungsintensität kann beispielsweise in einem infraroten Wellenlängenbereich, in einem sichtbaren Wellenlängenbereich und/oder bei einer Wellenlänge eines Bearbeitungslaserstrahls des Laserbearbeitungssystem von der Lichtquelle emittiert und vom Sensor detektiert werden. Dieser zumindest eine Wellenlängenbereich entspricht vorzugsweise einem durch das Sensormodul für die Fehlererkennung oder Prozessüberwachung erfassten Wellenlängenbereich der Prozessstrahlung. Dabei werden das Laserbearbeitungssystem, d.h. der Laserbearbeitungskopf und/oder das Sensormodul, und die Lichtquelle so zueinander ausgerichtet, dass das erfasste Intensitätssignal einen Maximalwert annimmt. Das erfasste Intensitätssignal wird anschließend mit zumindest einem Referenzwert verglichen.

Dieses Verfahren ermöglicht einen Vergleich von mehreren gleichartigen (d.h. identischen bzw. baugleichen) Laserbearbeitungssystemen anhand der erfassten Intensitätssignale, wenn diese mit demselben zumindest einen Referenzwert verglichen werden. Durch die Verwendung von Strahlung einer Lichtquelle, insbesondere einer stabilisierten Lichtquelle, zur Erzeugung der Intensitätssignale kann eine Inspektion des Laserbearbeitungssystems, d.h. des Laserbearbeitungskopfs und/oder des Sensormoduls, prozessunabhängig, schnell und einfach erfolgen und die Vergleichbarkeit der für eine Überwachung von Laserbearbeitungsprozessen verwendeten Intensitätssignale von mehreren gleichartigen Laserbearbeitungssystemen kann sichergestellt werden.

Basierend auf dem erfassten Intensitätssignal und dem Referenzwert kann auch ein Skalierungsfaktor bestimmt werden. Dieser wiederum ermöglicht es, identische Laserbearbeitungsprozesse, die von den mehreren gleichartigen Laserbearbeitungssystemen durchgeführt werden, mit demselben Überwachungsparameter bzw. denselben Überwachungsparametern zu überwachen. Dabei können entweder das von dem jeweiligen Laserbearbeitungssystem erfasste Intensitätssignal oder die Überwachungsparametern anhand des Skalierungsfaktors für dieses Laserbearbeitungssystem skaliert werden.

Baugleiche, identische oder gleichartige Laserbearbeitungssysteme bedeuten im Rahmen der vorliegenden Offenbarung mehrere Exemplare eines Typs von Laserbearbeitungssystem. Diese Exemplare können von demselben kommerziell erhältlichen Typ oder Modell eines Laserbearbeitungssystems sein. Identische oder dieselben Laserbearbeitungsprozesse bezeichnen Laserbearbeitungsprozesse, die mit identischen Prozessparametern durchgeführt werden oder wurden.

Gemäß einem ersten Aspekt der vorliegenden Offenbarung ist ein Verfahren zum Vergleichen von Laserbearbeitungssystemen bzw. von Komponenten zumindest eines Laserbearbeitungssystems angegeben, wobei ein Laserbearbeitungssystem einen Laserbearbeitungskopf und ein Sensormodul mit zumindest einem Sensor zum Erfassen von Prozessstrahlung, vorzugsweise einem photodiodenbasierten Sensor bzw. einer Photodiode, umfasst. Das Verfahren umfasst: Detektieren von Strahlung, die von einer Lichtquelle emittiert wird, durch den Sensor und Erzeugen eines entsprechenden Intensitätssignals, wobei die Strahlung von der Lichtquelle zum Sensor durch zumindest ein optisches Element im Laserbearbeitungskopf und/oder von zumindest einem optischen Element im Sensormodul geführt wird; Ausrichten des Laserbearbeitungskopfes und der Lichtquelle zueinander, sodass das Intensitätssignal einen Maximalwert annimmt; und Vergleichen des Intensitätssignals mit einem vorgegebenen Referenzwert.

Vorzugsweise ist der Sensor, bzw. der photodiodenbasierte Sensor oder die Photodiode, eingerichtet zum Detektieren von Prozessstrahlung eines Laserbearbeitungsprozesses, insbesondere eines Laserbearbeitungsprozesses, bei dem ein Bearbeitungslaserstrahl durch den Laserbearbeitungskopf auf zumindest ein (zu bearbeitendes) Werkstück eingestrahlt wird. Vorzugsweise ist der Sensor, bzw. der photodiodenbasierte Sensor oder die Photodiode, eingerichtet zum Detektieren einer Prozessstrahlung des Laserbearbeitungsprozesses in einem vorgegebenen Wellenlängenbereich und/oder bei einer vorgegebenen Wellenlänge. Insbesondere kann der Sensor, bzw. der photodiodenbasierte Sensor oder die Photodiode, eingerichtet sein zum Erfassen einer Intensität einer Prozessstrahlung in einem vorgegebenen Wellenlängenbereich und/oder bei einer vorgegebenen Wellenlänge und Erzeugen eines entsprechenden Intensitätssignals (und Ausgeben des Intensitätssignals). Die Prozessstrahlung ist insbesondere beim Durchführen des Laserbearbeitungsprozesses entstehende Prozessstrahlung. Der Laserbearbeitungskopf ist vorzugsweise eingerichtet zum Einstrahlen eines Bearbeitungslaserstrahls auf zumindest ein Werkstück zum Durchführen eines oder des Laserbearbeitungsprozesses.

Ein Strahlverlauf der Strahlung von der Lichtquelle zum Sensor kann zumindest abschnittsweise überlappend und/oder koaxial mit einem Strahlverlauf des Bearbeitungslaserstrahls im Laserbearbeitungskopf sein. Der Strahlverlauf der Strahlung von der Lichtquelle zum Sensor kann zumindest abschnittsweise innerhalb des Laserbearbeitungskopfs und/oder innerhalb des Sensormoduls verlaufen. Die Strahlung kann ausgehend von der Lichtquelle zunächst außerhalb des Laserbearbeitungskopfes verlaufen, anschließend in den Laserbearbeitungskopf eintreten und innerhalb des Laserbearbeitungskopfes verlaufen, danach in das Sensormodul eintreten und innerhalb des Sensormoduls verlaufen und schließlich auf den zumindest einen Sensor des Sensormoduls treffen.

Die Lichtquelle kann eine stabilisierte und/oder regelbare und/oder steuerbare Lichtquelle sein. Die Lichtquelle kann zumindest eine der folgenden sein oder umfassen: eine elektrische Lichtquelle, eine Halogenlampe, eine Leuchtdiode, eine Superlumineszenzdiode, und eine breitbandige Lichtquelle, insbesondere eine Lichtquelle mit einem Emissionsspektrum zwischen 350 nm und 2000 nm.

Eine stabilisierte Lichtquelle kann eine Lichtquelle angeben, die eine gleichbleibende Abstrahlcharakteristik bzw. Intensität aufweist. Eine stabilisierte Lichtquelle kann daher eine Lichtquelle angeben, die vorgegebene Emissionseigenschaften aufweist, die konstant oder stabil gehalten werden. Dazu kann ein Regelkreis vorgesehen sein. Die stabilisierte Lichtquelle kann also eine geregelte Lichtquelle sein. Die Emissionseigenschaften können eine Intensität der von der Lichtquelle emittierten Strahlung bei einer vorgegebenen Wellenlänge und/oder in einem vorgegebenen Wellenlängenbereich und/oder eine Abstrahlcharakteristik der Lichtquelle angeben. Durch die Überwachung und Regelung der Emissionseigenschaften der Lichtquelle kann sichergestellt werden, dass die Emissionseigenschaften nicht aufgrund von Umgebungsbedingungen, wie Luftfeuchtigkeit oder Temperatur, oder durch Alterung der Lichtquelle ungewollt variieren. Dadurch wiederum kann sichergestellt werden, dass die Emissionseigenschaften der Lichtquelle keinen Einfluss auf die Auswertung der Strahlführungs- und Detektionseigenschaften des Laserbearbeitungssystem haben. Die stabilisierte Lichtquelle kann insbesondere als geregelte LED oder geregelte Halogenlampe ausgebildet sein.

Das Detektieren der Strahlung kann das Detektieren einer Strahlungsintensität der Strahlung durch in einem vorgegebenen Wellenlängenbereich oder bei einer vorgegebenen Wellenlänge umfassen. Basierend auf der detektierten Strahlungsintensität kann das entsprechende Intensitätssignal erzeugt werden. Die Lichtquelle kann eingerichtet sein, um Strahlung in dem vorgegebenen Wellenlängenbereich bzw. bei der vorgegebenen Wellenlänge zu emittieren.

Das Detektieren der Strahlung kann das Detektierten einer Strahlungsintensität der Strahlung in einer Mehrzahl von vorgegebenen Wellenlängenbereichen und/oder bei einer Mehrzahl von vorgegebenen Wellenlängen durch entsprechende Photodioden umfassen. Darauf basierend können entsprechende Intensitätssignale erzeugt werden. Die entsprechenden Intensitätssignale können mit entsprechenden Referenzwerten verglichen werden.

Der vorgegebene Wellenlängenbereich kann zumindest einer der folgenden Wellenlängenbereiche sein oder umfassen: einen sichtbaren Wellenlängenbereich, einen Nahinfrarot (NIR)-Wellenbereich, einen infraroten Wellenlängenbereich, einen Wellenlängenbereich einer Temperaturstrahlung, einen Wellenlängenbereich einer Plasmastrahlung, Wellenlängen zwischen 350 nm bis 780 nm, Wellenlängen zwischen 780 nm bis 3 µm, Wellenlängen größer als 1 µm. Die vorgegebene Wellenlänge kann zumindest eine der folgenden Wellenlängen sein oder umfassen: eine Wellenlänge einer Laserquelle des Laserbearbeitungskopfes, eine Wellenlänge im Bereich zwischen 1030 nm und 1070 nm, vorzugsweise 1064 nm, eine Wellenlänge im sichtbaren grünen Spektralbereich, insbesondere in einem Bereich zwischen 500 nm und 570 nm, vorzugsweise bei 515 nm, eine Wellenlänge im sichtbaren blauen Spektralbereich, insbesondere in einem Bereich von 400 nm bis 500 nm, eine Wellenlänge in einem Bereich zwischen 440 nm und 460 nm, vorzugsweise bei 450 nm.

Beispielsweise kann die Strahlungsintensität der Strahlung durch eine erste Photodiode in einem sichtbaren Wellenlängenbereich, z.B. zwischen 350 nm bis 780 nm, detektiert werden und ein erstes Intensitätssignal kann erzeugt werden, und/oder durch eine zweite Photodiode kann die Strahlungsintensität bei einer Wellenlänge des Bearbeitungslaserstrahls des Laserbearbeitungssystems, z.B. bei einer Wellenlänge im Bereich zwischen 1030 nm und 1070 nm, vorzugsweise bei 1064 nm, detektiert werden und ein zweites Intensitätssignal kann erzeugt werden, und/oder durch eine dritte Photodiode kann die Strahlungsintensität in einem infraroten Wellenlängenbereich, z.B. zwischen 780 nm bis 3 µm, detektiert werden und ein drittes Intensitätssignal kann erzeugt werden. Die ersten bis dritten Intensitätssignale können entsprechend mit ersten bis dritten Referenzwerten verglichen werden. Der sichtbare Wellenlängenbereich kann einem Spektralbereich einer Plasmastrahlung entsprechen, die bei einem Laserbearbeitungsprozess erzeugt wird. Der infrarote Wellenlängenbereich kann einem Spektralbereich einer Temperaturstrahlung entsprechen, die bei dem Laserbearbeitungsprozess erzeugt wird. Das Ausrichten des Laserbearbeitungskopfes und der Lichtquelle zueinander kann derart erfolgen, dass zumindest eines der ersten bis dritten Intensitätssignale einen Maximalwert annimmt.

Die von der Lichtquelle emittierte Strahlung kann von dem zumindest einen optischen Element des Laserbearbeitungskopfes bzw. des Sensormoduls geführt und dabei von dem zumindest einen optischen Element transmittiert oder reflektiert werden. Das optische Element kann zumindest eines der folgenden sein oder umfassen: ein transmissives Element, ein reflektives Element, ein Schutzglas, ein Strahlteiler, ein Spiegel, eine Linse, eine Linsengruppe, ein Linsenpaket, eine Fokussierlinse(ngruppe), eine Kollimierlinse(ngruppe), und eine Optik.

Vorzugsweise werden alle zuvor genannten Schritte mit zumindest zwei baugleichen Laserbearbeitungsköpfen und mit demselben Sensormodul und derselben Lichtquelle durchgeführt. Dadurch können Strahlführungseigenschaften mehrerer baugleicher Laserbearbeitungsköpfe verglichen werden.

Alternativ oder zusätzlich werden alle zuvor genannten Schritte mit demselben Laserbearbeitungskopf und derselben Lichtquelle und mit zumindest zwei baugleichen Sensormodulen durchgeführt. Dadurch können Detektions- und Strahlführungseigenschaften mehrerer baugleicher Sensormodule verglichen werden. Beispielsweise kann das Verfahren bei einem Austausch eines ersten Sensormoduls durch ein baugleiches zweites Sensormodul an einem Laserbearbeitungskopf mit dem ersten Sensormodul und dem zweiten Sensormodul an diesem Laserbearbeitungskopf durchgeführt werden. Damit können Strahlführungs- und Detektionseigenschaften des ersten Sensormoduls und des zweiten Sensormoduls miteinander verglichen werden und es kann sichergestellt werden, dass die erfassten Intensitätssignale vergleichbar sind.

Alternativ oder zusätzlich werden alle zuvor genannten Schritte mit demselben Laserbearbeitungskopf, mit demselben Sensormodul und derselben Lichtquelle in einem vorgegebenen Zeitabstand wiederholt durchgeführt. Dadurch können Eigenschaften dieses Laserbearbeitungssystems, insbesondere dessen Strahlführungs- und/oder Detektionseigenschaften, zu verschiedenen Zeitpunkten verglichen werden. Somit kann eine Alterung und/oder Verschmutzung der optischen Komponenten, beispielsweise eines Schutzglases, und/oder des Sensors erkannt werden. Beispielsweise kann das Verfahren an demselben Laserbearbeitungssystem bei Inbetriebnahme und/oder bei Wartung bzw. nach einem gewissen Zeitraum erneut durchgeführt werden. Auch kann das Verfahren bei der Inbetriebnahme und/oder Wartung eines Laserbearbeitungssystems oder nach dem Austausch von zumindest einer Komponente dieses Laserbearbeitungssystems durchgeführt werden. Die zumindest eine Komponente des Laserbearbeitungssystems kann beispielsweise eine Laserquelle, das Sensormodul, der Sensor des Sensormoduls, das optische Element des Laserbearbeitungskopfes oder das optische Element des Sensormoduls sein.

Vorzugsweise sind das Sensormodul und der Laserbearbeitungskopf relativ zueinander fest und/oder stationär angeordnet. Beispielsweise sind das Sensormodul und der Laserbearbeitungskopf aneinander befestigt. Das Sensormodul kann insbesondere an einem Gehäuse des Laserbearbeitungskopfes montiert sein. Besonders bevorzugt können ein Abstand und eine Orientierung des Sensormoduls und des Laserbearbeitungskopfes zueinander fest sein.

Das Ausrichten des Laserbearbeitungskopfes und der Lichtquelle zueinander kann insbesondere derart erfolgen, dass ein Mittelpunkt der Lichtquelle auf einer optischen Achse des Laserbearbeitungskopfes, insbesondere auf einer optischen Achse einer Fokussieroptik des Laserbearbeitungskopfes, liegt, und/oder dass eine Mittelachse der Lichtquelle mit der optischen Achse des Laserbearbeitungskopfes und/oder der Fokussieroptik zusammenfällt. Mittelachse der Lichtquelle bezeichnet vorzugsweise die Mittelachse bzw. zentrale Achse des Abstrahlkegels der Lichtquelle. Das Ausrichten des Laserbearbeitungskopfes und der Lichtquelle zueinander kann insbesondere derart erfolgen, dass der Mittelpunkt der Lichtquelle in einem Fokuspunkts der Fokussieroptik liegt. Das Ausrichten des Laserbearbeitungskopfes und der Lichtquelle zueinander kann ferner das Einstellen des Fokuspunkts der Fokussieroptik umfassen.

Dazu kann das Ausrichten des Laserbearbeitungskopfes und der Lichtquelle zueinander zumindest einen der folgenden Schritte umfassen: Einstellen eines Abstands zwischen dem Laserbearbeitungskopf und der Lichtquelle, Einstellen einer Orientierung des Laserbearbeitungskopfes und der Lichtquelle zueinander, Verkippen des Laserbearbeitungskopfes und der Lichtquelle zueinander, Bewegen des Laserbearbeitungskopfes relativ zur Lichtquelle, Bewegen der Lichtquelle relativ zum Laserbearbeitungskopf, Bewegen des Laserbearbeitungskopfes in einer Ebene senkrecht zu einer optischen Achse des Laserbearbeitungskopfes, Bewegen des Laserbearbeitungskopfes parallel zu einer optischen Achse des Laserbearbeitungskopfes. Die optische Achse des Laserbearbeitungskopf kann die optische Achse der Fokussieroptik des Laserbearbeitungskopfes sein oder dieser entsprechen.

Das Verfahren kann ferner einen Schritt zum Ausrichten des Sensormoduls zum Laserbearbeitungskopf umfassen. Vorzugsweise wird das Sensormodul so ausgerichtet, dass die optische Achse des Sensormoduls mit der optischen Achse eines optischen Ausgangs des Laserbearbeitungskopfes zusammenfällt, d.h. koaxial ist. Die optische Achse des Sensormoduls bezeichnet vorzugsweise die optische Achse eines optischen Eingangs des Sensormoduls, durch den aus dem Laserbearbeitungskopf ausgekoppelte Strahlung in das Sensormodul eintritt. Die optische Achse des Sensormoduls kann die optische Achse einer Fokussieroptik des Sensormoduls sein oder dieser entsprechen. Die optische Achse des optischen Ausgangs des Laserbearbeitungskopfes bezeichnet vorzugsweise die optische Achse des optischen Ausgangs, durch den Strahlung aus dem Laserbearbeitungskopf zum Sensormodul ausgekoppelt wird. Das Ausrichten des Sensormoduls kann ein Bewegen des Sensormoduls relativ zur optischen Achse eines optischen Ausgangs des Laserbearbeitungskopfes, insbesondere ein Verkippen um die optische Achse des optischen Ausgangs und/oder ein Verschieben in einer Ebene senkrecht zur optischen Achse eines optischen Ausgangs des Laserbearbeitungskopfes, umfassen.

Das Verfahren kann ferner einen Schritt zum Ausrichten der zumindest einen Photodiode im Sensormodul umfassen. Das Ausrichten der zumindest einen Photodiode kann ein Bewegen der Photodiode relativ zur optischen Achse des Sensormoduls Das Ausrichten der zumindest einen Photodiode kann derart erfolgen, dass eine erfasste Intensität maximal wird.

Das Verfahren kann weiter das Bereitstellen der Lichtquelle außerhalb des Laserbearbeitungskopfes umfassen. Das Bereitstellen der Lichtquelle kann das Positionieren der Lichtquelle an einer vorgegebenen Position, z.B. an einer Halterung oder an einem Werkstück, umfassen. Die vorgegebene Position kann einer Bearbeitungsposition an einem Werkstück entsprechen. Die Bearbeitungsposition kann einer vorgegebenen Position zum Einstrahlen eines Bearbeitungslaserstrahls bei einem Laserbearbeitungsprozess entsprechen. Die Lichtquelle kann fest installiert sein oder kann fest installiert werden. Das Ausrichten des Laserbearbeitungskopfes und der Lichtquelle zueinander kann in diesem Fall lediglich durch Bewegen des Laserbearbeitungskopfes erfolgen.

In einem Ausführungsbeispiel kann zunächst das Sensormodul bzw. die zumindest eine Photodiode relativ zum Laserbearbeitungskopf ausgerichtet werden. Dies kann beispielsweise mit Hilfe eines Pilotlasers geschehen, der eine Fokusposition des Laserstrahls visualisiert. Anschließend kann ein Abstand des Laserbearbeitungskopfs oder eine Fokuslage bzw. ein Fokuspunkt eines Bearbeitungslaserstrahls oder des Pilotlasers auf die Lichtquelle eingestellt werden. Hierfür kann beispielsweise ein idealer Arbeitsabstand für eine vorgegebene Laseroptik des Laserbearbeitungskopfs bekannt sein. Dann wird vorzugsweise die Ausrichtung des Laserbearbeitungskopfs in einer XY Ebene senkrecht zur Ausbreitungsrichtung des Bearbeitungslaserstrahls bezüglich der Lichtquelle durchgeführt. Hierfür kann die Ausrichtung des Laserbearbeitungskopfs in XY Ebene solange verändert werden, bis ein maximales Signal durch das Sensormodul bzw. durch die zumindest eine Photodiode erhalten wird.

Der zumindest eine Referenzwert kann ein oberen und unteren Referenzwert, d.h. ein Referenzintervall, umfassen. Das Vergleichen des Intensitätssignals mit dem Referenzwert kann umfassen: Vergleichen des Mittelwerts des Intensitätssignals mit dem Referenzwert und/oder Bestimmen, ob der Mittelwert des Intensitätssignals innerhalb des Referenzintervalls liegt. Alternativ zum Mittelwert kann auch der Maximalwert des Intensitätssignals verwendet werden.

Das Vergleichen des Mittelwerts des Intensitätssignals mit einem Referenzwert kann das Bestimmen des Mittelwerts des Intensitätssignals umfassen. Der Mittelwert des Intensitätssignals kann als zeitlicher Mittelwert des Intensitätssignals bestimmt werden. Der Mittelwert kann ein arithmetischer Mittelwert oder ein geometrischer Mittelwert sein. Im Rahmen dieser Offenbarung kann der Mittelwert auch als ein Median definiert sein. Das Bestimmen des Mittelwerts kann umfassen: Entfernen von Ausreißern des Intensitätssignals, d.h. Entfernen der kleinsten und/oder Entfernen der größten Werte, und Bestimmen des Mittelwerts des Intensitätssignals basierend auf den verbleibenden Werten des Intensitätssignals.

Der Mittelwert des Intensitätssignals kann für einen vorgegebenen Laserbearbeitungskopf und einen vorgegebenen Sensor und/oder ein vorgegebenes Sensormodul bestimmt werden. Basierend auf dem so bestimmten Mittelwert des Intensitätssignals und auf dem Referenzwert kann ein Skalierungsfaktor für diesen vorgegebenen Laserbearbeitungskopf und diesen vorgegebenen Sensor bestimmt werden. Alternativ zum Mittelwert kann auch der Maximalwert des Intensitätssignals verwendet werden.

Das Bestimmen des Skalierungsfaktors kann das Bestimmen eines Quotienten zwischen dem Mittelwert bzw. dem Maximalwert des Intensitätssignals und einem Referenzwert umfassen. Das Bestimmen des Quotienten zwischen dem Mittelwert bzw. dem Maximalwert des Intensitätssignals und dem Referenzwert kann das Dividieren des Mittelwerts bzw. des Maximalwerts des Intensitätssignals durch den Referenzwert umfassen. Demnach kann der Skalierungsfaktor dimensionslos sein.

Vorzugsweise ist der Referenzwert ein Mittelwert oder ein Maximalwert eines Intensitätssignal, das durch die zuvor beschriebenen Schritte Detektieren von Strahlung und Ausrichten des Laserbearbeitungskopfes für ein Referenz-Laserbearbeitungssystem bestimmt wurden. Das Referenz-Laserbearbeitungssystem kann mit dem betrachteten Laserbearbeitungssystem baugleich sein.

Der Skalierungsfaktor kann für diesen Laserbearbeitungskopf und diesen Sensor gespeichert werden. Die Speicherung kann durch eine Steuereinheit erfolgen.

Das Intensitätssignal kann ein eindimensionales, zeitlich variables Signal sein. Das Intensitätssignal kann ein digitales Signal sein. Das Intensitätssignal kann eine Mehrzahl von Signalwerten umfassen, wobei jeder Signalwert einem jeweiligen Zeitpunkt zugeordnet ist. Ein Signalwert kann der zum zugeordneten Zeitpunkt erfassten Intensität der Strahlung im vorgegebenen Wellenlängenbereich bzw. bei der vorgegebenen Wellenlänge entsprechen. Die Photodiode kann ein analoges Signal als das Intensitätssignal, beispielsweise ein Strom- oder Spannungssignal, ausgeben. Das analoge Intensitätssignal kann vom Sensormodul oder einer Steuereinheit in ein digitales Signal umgewandelt werden.

Gemäß einem weiteren Aspekt der vorliegenden Offenbarung ist ein Verfahren zum Überwachen eines Laserbearbeitungsprozesses angegeben, das Verfahren umfassend: Durchführen eines Laserbearbeitungsprozesses zum Bearbeiten von zumindest einem Werkstück durch Einstrahlen eines Bearbeitungslaserstrahls auf das zumindest eine Werkstück durch einen Laserbearbeitungskopf; Detektieren von Prozessstrahlung des Laserbearbeitungsprozesses durch einen Sensor, vorzugweise eine Photodiode, eines Sensormoduls in einem vorgegebenen Wellenlängenbereich und Erzeugen eines entsprechenden Intensitätssignals; Skalieren des Intensitätssignals mit einem für diesen den Laserbearbeitungsprozess durchführenden Laserbearbeitungskopf und diesen Sensor bestimmten Skalierungsfaktor, und Überwachen des Laserbearbeitungsprozesses anhand des skalierten Intensitätssignal und anhand von zumindest einem für das Intensitätssignal vorgegebenen Überwachungsparameter, oder Skalieren von zumindest einen vorgegebenen Überwachungsparameter für das Intensitätssignal mit dem für diesen Laserbearbeitungskopf und diesen Sensor bestimmten Skalierungsfaktor, und Überwachen des Laserbearbeitungsprozesses anhand des Intensitätssignals und anhand des zumindest einen skalierten Überwachungsparameters. Der Skalierungsfaktor kann wie vorstehend bestimmt worden sein.

Das Skalieren des Intensitätssignals kann ein Dividieren des Intensitätssignals durch den Skalierungsfaktor umfassen. Das Skalieren des Überwachungsparameters kann das Multiplizieren des Überwachungsparameters mit dem Skalierungsfaktor umfassen.

Ein Laserbearbeitungsprozess kann das Bearbeiten des zumindest einen Werkstücks durch Einstrahlen eines Bearbeitungslaserstrahls auf einen vorgegebenen Bearbeitungsbereich an dem Werkstück, beispielsweise entlang eines vorgegebenen Bearbeitungspfades, umfassen. Der Laserbearbeitungsprozess kann ein Laserschweißen, auch Laserschweißprozess genannt, umfassen. In diesem Fall kann durch Einstrahlen des Bearbeitungslaserstrahls entlang des Bearbeitungspfades eine Schweißnaht ausgebildet werden. Der Laserbearbeitungsprozess kann alternativ oder zusätzlich ein Laserschneiden, auch Laserschneidprozess genannt, umfassen. In diesem Fall kann Einstrahlen des Bearbeitungslaserstrahls entlang des Bearbeitungspfades eine Schnittkante ausgebildet werden. Der Laserbearbeitungsprozess kann auch einem Einstechvorgang in das zumindest eine Werkstück umfassen. Der zumindest eine Bearbeitungsbereich kann in diesem Fall einem Einstechloch entsprechen. In diesem Fall kann durch das Einstrahlen des Bearbeitungslaserstrahls auf den Bearbeitungsbereich das Einstichloch ausgebildet werden.

Die beim Durchführen des Laserbearbeitungsprozesses entstehende Prozessstrahlung kann zumindest eine der folgenden umfassen: eine Temperaturstrahlung im infraroten Wellenlängenbereich, eine Plasmastrahlung im sichtbaren Wellenlängenbereich und eine von dem Werkstück reflektierte Laserstrahlung. Die reflektierte Laserstrahlung kann im infraroten Wellenlängenbereich oder im sichtbaren Wellenlängenbereich liegen.

Ein Laserbearbeitungsprozess kann einen oder mehrere Prozessparamater definieren, um die Bearbeitung wie vorgegeben durchzuführen. Die Prozessparameter können zumindest einen vorgegebenen Bearbeitungsbereich, eine Fokuslage, eine Laserleistung, eine Vorschubgeschwindigkeit, einen Laserstrahldurchmesser und/oder einen Abstand und/oder Orientierung des Laserbearbeitungskopfes zu einem Werkstück umfassen. Prozessparameter wie die Fokuslage, die Vorschubgeschwindigkeit, die Laserleistung und/oder der Laserstrahldurchmesser können für jeden vorgegebenen Bearbeitungsbereich vorgegeben sein und können veränderlich oder konstant sein.

Der zumindest eine Überwachungsparameter für das Intensitätssignal kann ausgewählt aus der Gruppe sein, die umfasst: eine obere Hüllkurve, eine untere Hüllkurve, einen oberen Schwellwert, einen unteren Schwellwert, einen Referenzverlauf, einen Mittelwert. Es kann ein Fehler ausgegeben werden, wenn das Intensitätssignal außerhalb der Hüllkurven liegt oder einen Schwellwert über- oder unterschreitet.

Durch das Skalieren des Intensitätssignals und/oder des jeweiligen zumindest einen Überwachungsparameters werden die bei der Durchführung des Laserbearbeitungsprozesses durch mehrere baugleiche Laserbearbeitungssysteme erzeugten Intensitätssignale zwischen diesen Laserbearbeitungssystemen vergleichbar. Somit können Unterschiede in den erzeugten Intensitätssignalen zwischen den baugleichen Laserbearbeitungssystemen berücksichtigt und ausgeglichen werden.

Zudem können zur Überwachung des identischen Laserbearbeitungsprozesses dieselben Überwachungsparameter bzw. dasselbe Überwachungsverfahren bzw. -programm an allen der baugleichen Laserbearbeitungssysteme verwendet werden. Insbesondere kann die Überwachung des Laserbearbeitungsprozesses basierend auf Überwachungsparametern erfolgen, die für ein anderes Laserbearbeitungssystem ermittelt wurden, das zu dem betrachteten Laserbearbeitungssystem baugleich ist, oder die für ein baugleiches Referenz-Laserbearbeitungssystem ermittelt wurden. Die Überwachung des Laserbearbeitungsprozesses kann insbesondere basierend auf Überwachungsparametern, die für das Referenz-Laserbearbeitungssystem bestimmt wurden, durchgeführt werden.

Gemäß einem weiteren Aspekt der vorliegenden Offenbarung ist ein Laserbearbeitungssystem angegeben, umfassend: einen Laserbearbeitungskopf, eingerichtet zum Einstrahlen eines Bearbeitungslaserstrahls auf zumindest ein Werkstück zum Durchführen eines Laserbearbeitungsprozesses, ein Sensormodul mit zumindest einem Sensor, vorzugweise einem photodiodenbasierten Sensor bzw. einer Photodiode, zum Erfassen einer Intensität einer Prozessstrahlung in einem vorgegebenen Wellenlängenbereich und/oder bei einer vorgegebenen Wellenlänge, und eine Steuereinheit, eingerichtet, um ein Verfahren zum Vergleichen von Laserbearbeitungssystemen gemäß Ausführungsformen der vorliegenden Offenbarung und ein Verfahren zum Überwachen eines Laserbearbeitungsprozesses gemäß Ausführungsformen der vorliegenden Offenbarung durchzuführen. Die Steuereinheit kann eingerichtet sein, um den Laserbearbeitungskopf, das Sensormodul, eine Laserquelle und/oder die Lichtquelle zu steuern.

Das Laserbearbeitungssystem kann eingerichtet sein, um das Verfahren zum Vergleichen von Laserbearbeitungssystemen und/oder das Verfahren zum Überwachen des Laserbearbeitungsprozesses gemäß Ausführungsformen der vorliegenden Offenbarung durchzuführen.

Das Laserbearbeitungssystem kann eine Laserquelle zum Erzeugen des Bearbeitungslaserstrahls umfassen. Das Laserbearbeitungssystem kann ferner eine zuvor beschriebene Lichtquelle umfassen.

Der Laserbearbeitungskopf kann ein Laserschweißkopf oder ein Laserschneidkopf sein. Das Sensormodul kann an einem Gehäuse des Laserbearbeitungskopfes montiert oder angeordnet sein.

Der zumindest eine Sensor kann eine spektrale Empfindlichkeit in einem vorgegebenen Wellenlängenbereich und/oder bei einer vorgegebenen Wellenlänge aufweisen, um eine Strahlungsintensität in dem vorgegebenen Wellenlängenbereich und/oder bei der vorgegebenen Wellenlänge zu detektieren. Der zumindest eine Sensor kann nur bei einer bestimmten Wellenlänge oder in einem bestimmten Wellenlängenbereich sensitiv sein. Alternativ kann der zumindest eine Sensor auch in mehreren vorgegebenen Wellenlängenbereichen oder bei mehreren vorgegebenen Wellenlängen sensitiv sein.

Der Sensor kann ferner eingerichtet sein, um basierend auf der erfassten Prozessstrahlung bzw. auf der erfassten Strahlung der Lichtquelle ein Intensitätssignal gemäß Ausführungsformen der vorliegenden Offenbarung auszugeben. Die Steuereinheit kann eingerichtet sein, um ein Intensitätssignal von dem zumindest einen Sensor bzw. von dem Sensormodul zu empfangen.

Vorzugsweise umfasst das Sensormodul eine erste Photodiode, die eingerichtet ist, um ein erstes Intensitätssignal basierend auf erfasster Strahlungsintensität in einem sichtbaren Wellenlängenbereich, und/oder eine zweite Photodiode, die eingerichtet ist, um ein zweites Intensitätssignal basierend auf erfasster Strahlungsintensität bei einer Wellenlänge des Bearbeitungslaserstrahls der Laserquelle zu erzeugen, und/oder eine dritte Photodiode, die eingerichtet ist, um ein drittes Intensitätssignal basierend auf erfasster Strahlungsintensität in einem nahinfraroten oder infraroten Wellenlängenbereich zu erzeugen.

Das Sensormodul kann an einem Gehäuse des Laserbearbeitungskopfes montiert oder angeordnet sein. Der Laserbearbeitungskopf kann ein Auskoppelelement, beispielsweise einen Strahlteiler, zum Auskoppeln von Prozessstrahlung bzw. von der Lichtquelle emittierter Strahlung aus dem Strahlverlauf des Bearbeitungslaserstrahls aufweisen. Der Laserbearbeitungskopf kann einen optischen Ausgang zum Auskoppeln von Strahlung, insbesondere von Prozessstrahlung bzw. von der Lichtquelle emittierter Strahlung, umfassen und das Sensormodul kann einen optischen Eingang zum Einkoppeln der aus dem Laserbearbeitungskopf ausgekoppelten von Strahlung umfassen. Vorzugsweise ist das Sensormodul am Laserbearbeitungskopf so angebracht, dass der optische Eingang des Sensormoduls und der optische Ausgang des Laserbearbeitungskopfs miteinander (optisch) verbunden sind. Die Position des Auskoppelelements im Laserbearbeitungskopf entspricht vorzugsweise einer Position des optischen Ausgangs des Laserbearbeitungskopfs zum Auskoppeln von Strahlung aus dem Laserbearbeitungskopf. Die Strahlung, insbesondere die Prozessstrahlung bzw. die von der Lichtquelle emittierte Strahlung, kann zwischen dem Werkstück bzw. der Lichtquelle und dem zumindest einen Sensor demnach zumindest teilweise innerhalb des Laserbearbeitungskopfes und/oder überlappend mit Bearbeitungslaserstrahl verlaufen.

Der Laserbearbeitungskopf kann als sogenannter Festoptik-Laserbearbeitungskopf oder als sogenannter Scanner-Laserbearbeitungskopf ausgebildet sein. Der Scanner-Laserbearbeitungskopf kann eine Ablenkeinheit zum Ablenken des Bearbeitungslaserstrahls und des Anregungsstrahls auf einem Werkstück aufweisen. Die Ablenkeinheit kann eine Scanner-Optik, Scanner-System, Scanner-Spiegel und/oder einen Galvano-Scanner aufweisen. Bei dem Festoptik-Laserbearbeitungskopf kann der Bearbeitungslaserstrahl durch Bewegung des Laserbearbeitungskopfes selbst relativ zu einem Werkstück bewegt werden, oder das Werkstück kann relativ zum Laserbearbeitungskopf bewegt werden.

Der von der Laserquelle erzeugte Bearbeitungslaserstrahl kann eine Wellenlänge im infraroten Spektralbereich, insbesondere in einem Bereich zwischen 1030 nm und 1070 nm, vorzugsweise 1064 nm, oder im sichtbaren grünen Spektralbereich, insbesondere in einem Bereich zwischen 500 nm und 570 nm, vorzugsweise bei 515 nm, oder im sichtbaren blauen Spektralbereich, insbesondere in einem Bereich von 400 nm bis 500 nm, oder in einem Bereich zwischen 440 nm und 460 nm, vorzugsweise bei 450 nm, umfassen.

### Kurzbeschreibung der Zeichnungen

Die Erfindung wird im Folgenden anhand von Figuren im Detail beschrieben.
Fig. 1 zeigt eine schematische Darstellung eines Laserbearbeitungssystems zum Durchführen eines Laserbearbeitungsprozesses gemäß Ausführungsformen;
Fig. 2 zeigt einen zeitlichen Verlauf von Intensitätssignalen für einen vorgegebenen Laserschweißprozess sowie entsprechende obere und untere Hüllkurven;
Fig. 3 zeigt eine schematische Ansicht einer Lichtquelle gemäß Ausführungsformen der vorliegenden Offenbarung;
Fig. 4 zeigt ein Flussdiagramm eines Verfahrens zum Vergleichen von Laserbearbeitungssystemen gemäß Ausführungsformen;
Fig. 5 zeigt Intensitätssignale, die mithilfe eines Verfahrens zum Vergleichen von Laserbearbeitungssystemen gemäß Ausführungsformen der vorliegenden Offenbarung erzeugt wurden.

### Detaillierte Beschreibung der Zeichnungen

Im Folgenden werden, sofern nicht anders vermerkt, für gleiche und gleichwirkende Elemente dieselben Bezugszeichen verwendet.

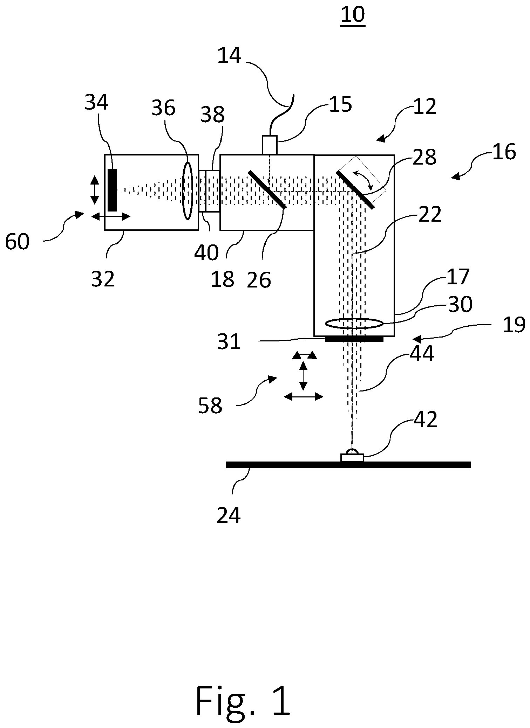

Fig. 1 zeigt eine schematische Darstellung eines Laserbearbeitungssystems zum Durchführen eines Laserbearbeitungsprozesses gemäß Ausführungsformen.

Das Laserbearbeitungssystem 10 umfasst einen Laserbearbeitungskopf 12, ein Sensormodul 32 und eine Steuereinheit (nicht gezeigt). Im Folgenden werden Ausführungsformen beschrieben, in denen der Laserbearbeitungskopf 12 als Schweißkopf ausgebildet ist, und in denen das Laserbearbeitungssystem 10 eingerichtet ist, um einen Laserschweißprozess durchzuführen. Die vorliegende Offenbarung ist hierauf aber nicht beschränkt. Der Laserbearbeitungskopf 12 kann beispielsweise auch als Schneidkopf ausgebildet sein, und das Laserbearbeitungssystem 10 kann eingerichtet sein, um einen Laserschneidprozess durchzuführen. Das Laserbearbeitungssystem 10 kann auch kurz als Anlage bezeichnet werden.

Wie gezeigt ist der Laserbearbeitungskopf 12 modular aufgebaut. Der Laserbearbeitungskopf 12 weist ein Hauptmodul 16 mit einem Gehäuse 17 auf. Der Laserbearbeitungskopf 12 weist ferner ein Einkoppelmodul 18 zum Einkoppeln eines Laserstrahls (nicht gezeigt) in den Laserbearbeitungskopf 12 auf. Die vorliegende Offenbarung ist hierauf aber nicht beschränkt.

Der Laserbearbeitungskopf 12 kann weitere, nicht gezeigte Module aufweisen. Beispielsweise kann der Laserbearbeitungskopf 12 zwischen dem Einkoppelmodul 18 und dem Sensormodul 32 ein Kameramodul aufweisen, um ein Bild von einer Oberfläche eines Werkstücks 24 aufzunehmen.

Das Laserbearbeitungssystem 10 kann ferner eine Laserquelle (nicht gezeigt) zum Erzeugen des Laserstrahls, auch als Bearbeitungslaserstrahl oder kurz Bearbeitungsstrahl bezeichnet, umfassen. Die Laserquelle kann den Laserstrahl beispielsweise mit einer Wellenlänge von 1064 nm erzeugen. Der Laserstrahl kann über eine Lichtleitfaser 14 von der Laserquelle zum Laserbearbeitungskopf 12 geführt werden.

Ein Ende 15 der Lichtleitfaser 14 ist mit dem Einkoppelmodul 18 des Laserbearbeitungskopfes 12, z.B. über einen Faserkoppler, verbunden, um den Laserstrahl in das Einkoppelmodul 18 einzukoppeln. Der in das Einkoppelmodul 18 eingekoppelte Laserstrahl verläuft anschließend vom Einkoppelmodul 18 in das Hauptmodul 16 und tritt vom Hauptmodul 16 über eine Austrittsöffnung 19 aus dem Laserbearbeitungskopf 12 aus, um auf ein Werkstück 24 gerichtet zu werden. Das Hauptmodul 16 kann ferner eine Düse (nicht gezeigt) an der Austrittsöffnung 19 aufweisen.

Gemäß weiteren, nicht gezeigten Ausführungsformen kann das Einkoppelmodul 18 auch an einer Oberseite des Hauptmoduls 16 angeordnet sein, oder es kann weggelassen sein. In diesem Beispiel wird der Laserstrahl direkt von der Laserquelle oder dem Ende 15 der Lichtleitfaser 14 in das Hauptmodul 16 eingekoppelt.

In Fig. 1 ist der (theoretische) Strahlverlauf des Laserstrahls durch das Bezugszeichen 22 veranschaulicht. Innerhalb des Laserbearbeitungskopfes 12 verläuft der Laserstrahl von der Lichtquelle bzw. dem Ende 15 der Lichtleitfaser zu der Austrittsöffnung 19 des Laserbearbeitungskopfs 12 und wird anschließend auf das Werkstück 24 eingestrahlt, um einen Laserbearbeitungsprozess, beispielsweise einen Laserschweißprozess auszuführen.

Der Laserbearbeitungskopf 12 weist zumindest ein optisches Element zum Führen des Laserstrahls auf. Das zumindest eine optische Element zum Führen des Laserstrahls kann auch als Strahlführungsoptik bezeichnet werden. Beispielsweise ist eine Fokussieroptik 30 zum Fokussieren des Laserstrahls auf das Werkstück 24 und eine Kollimatoroptik (nicht gezeigt) zum Kollimieren des Laserstrahls vorgesehen. Ferner weist der Laserbearbeitungskopf 12 eine Ablenkeinheit 28 zum Ablenken des Laserstrahls auf dem Werkstück 24 und ein Auskoppelelement 26, z.B. einen Strahlteiler, auf. Das Auskoppelelement 26 wird im Folgenden anhand des Beispiels des Strahlteilers beschrieben, ist aber nicht auf einen Strahlteiler beschränkt. Das Auskoppelelement 26 ist in dem in Fig. 1 gezeigten Beispiel zwischen dem optischen Ausgang 38 des Laserbearbeitungskopfs und der Ablenkeinheit 28 angeordnet, ist jedoch nicht auf diese Position beschränkt. Das Auskoppelelement 26 kann auch zwischen der Fokussieroptik 30 und der Ablenkeinheit 28 angeordnet sein. Das Auskoppelelement bzw. der Strahlteiler 26 dient dazu, Licht bzw. Strahlung, die in den Laserbearbeitungskopf 12 über die Austrittsöffnung 19 eintritt, aus dem Strahlverlauf des Bearbeitungslaserstrahls auszukoppeln, beispielsweise beim Laserbearbeitungsprozess entstehende Prozessstrahlung (nicht gezeigt) und/oder von einer Lichtquelle 42 zur Inspektion emittierte Strahlung. Der Strahlteiler 26 kann beispielsweise als dichroitischer Spiegel ausgebildet sein.

Für eine Inspektion des Laserbearbeitungssystems, insbesondere des Laserbearbeitungskopfs 12 und/oder des Sensormoduls 32, ist eine Lichtquelle 42 vorgesehen, die nachfolgend ausführlich beschrieben wird. Der Laserbearbeitungskopf 12 kann weitere optische Elemente zur Strahlführung aufweisen. Beispielsweise weist der Laserbearbeitungskopf 12 vorzugsweise ein Schutzglas 31 an der Austrittsöffnung 19 des Laserbearbeitungskopfes 12 auf, um das Innere des Laserbearbeitungskopfes 12 vor Schmutz, Rauch, Spritzern etc. zu schützen, die beim Laserbearbeitungsprozess entstehen.

Der Laserbearbeitungskopf 12 kann als sogenannter Festoptik- Laserbearbeitungskopf oder als sogenannter Scanner-Laserbearbeitungskopf ausgebildet sein. In Fig. 1 ist der Laserbearbeitungskopf 12 als Scanner-Laserbearbeitungskopf ausgebildet. Der Scanner-Laserbearbeitungskopf weist die bewegliche Ablenkeinheit 28 zum Ablenken des Laserstrahls relativ zu dem Werkstück 24 und zum Einstrahlen des Laserstrahls entlang eines Bearbeitungspfads an dem Werkstück 24 auf. Die Ablenkeinheit 28 kann eine Scanner-Optik, ein Scanner-System, einen Scanner-Spiegel und/oder einen Galvano-Scanner aufweisen. Bei dem Festoptik-Laserbearbeitungskopf kann der Laserstrahl durch Bewegung des Laserbearbeitungskopfs 12 selbst relativ zum Werkstück 24 bewegt werden, oder das Werkstück 24 wird relativ zum Laserbearbeitungskopf 12 bewegt.

Beim Einstrahlen des Bearbeitungslaserstrahls auf das Werkstück 24 zum Durchführen des Laserbearbeitungsprozesses entsteht Prozessstrahlung (nicht gezeigt), die von dem Werkstück 24 abgestrahlt wird und in den Laserbearbeitungskopf eintritt. Die Prozessstrahlung umfasst Strahlung im sichtbaren Wellenlängenbereich, insbesondere emittierte Plasmastrahlung, Strahlung im infraroten Wellenlängenbereich, insbesondere emittierte Infrarot- oder Temperaturstrahlung, und von dem Werkstück 24 reflektierte Laserstrahlung des eingestrahlten Bearbeitungslaserstrahls. Die Prozessstrahlung kann nach Eintritt in den Laserbearbeitungskopf 12 bzw. in das Sensormodul 32 und vor dem Auftreffen auf dem Sensor 34 im Wesentlichen denselben Strahlverlauf wie die in Fig. 1 gezeigte Strahlung 44 der Lichtquelle 42 aufweisen. Die vorliegende Offenbarung ist hierauf aber nicht beschränkt.

Bei der in Fig. 1 gezeigten Ausführungsform tritt ein Teil der Strahlung 44 der Lichtquelle 42 über die Austrittsöffnung 19 in den Laserbearbeitungskopf 12 ein und verläuft im Laserbearbeitungskopf 12 überlappend mit dem (theoretischen) Strahlverlauf des Bearbeitungslaserstrahls . Die Strahlung 44 der Lichtquelle 42 wird von dem Strahlteiler 26 aus dem Strahlverlauf des Bearbeitungslaserstrahls ausgekoppelt, um in das Sensormodul 32 einzutreten und auf den Sensor 34 zu treffen. Der Laserbearbeitungskopf 12 weist einen optischen Ausgang 38 zum Auskoppeln der Prozessstrahlung bzw. der von der Lichtquelle 42 emittierten Strahlung 44 auf und das Sensormodul 32 weist einen optischen Eingang 40 zum Einkoppeln der aus dem Laserbearbeitungskopf 12 ausgekoppelten Strahlung auf. Die von der Lichtquelle 42 emittierte Strahlung 44verläuft zwischen dem Werkstück 24 und dem Sensor 34 also zumindest streckenweise innerhalb des Laserbearbeitungskopfes 12 und/oder überlappend mit dem (theoretischen) Strahlverlauf des Bearbeitungslaserstrahls.

Der in den Laserbearbeitungskopf 12 eingetretene Teil der Prozessstrahlung bzw. der von der Lichtquelle 42 emittierten Strahlung 44 wird beim Verlauf durch den Laserbearbeitungskopf 12 auch durch die Strahlführungsoptiken für den Bearbeitungslaserstrahl geführt. Dies kann ein Reflektieren oder Transmittieren der Strahlung umfassen. Beispielsweise kann die Strahlung durch die Fokussieroptik 36 für den Bearbeitungslaserstrahl geformt und von der Ablenkeinheit 26 reflektiert bzw. abgelenkt werden. Ferner passiert die Strahlung den Strahlteiler 26, bevor sie in das Sensormodul 32 eintritt. Im Sensormodul 32 wird die Strahlung durch die Fokussieroptik 36 fokussiert und trifft anschließend auf den Sensor 34. In Fig. 1 tritt die Strahlung durch den Strahlteiler 26 hindurch. Der Strahlteiler 26 kann aber auch so ausgelegt sein, dass die Strahlung am Strahlteiler 26 reflektiert wird. In diesem Fall ist die Position des Lichtleitfaserendes 14 und die Position des Sensormoduls 32 vertauscht.

In Fig. 1 wird der Bearbeitungslaserstrahl am Strahlteiler 26 reflektiert bzw. abgelenkt und die Prozessstrahlung bzw. die von der Lichtquelle 42 emittierte Strahlung 44 wird durch den Strahlteiler 26 transmittiert. Die vorliegende Offenbarung ist aber nicht darauf beschränkt.

Das Sensormodul 32 weist zumindest einen Sensor 34 auf, der eingerichtet ist, um eine Strahlungsintensität der Prozessstrahlung in einem vorgegebenen Wellenlängenbereich oder bei einer vorgegebenen Wellenlänge zu detektieren oder zu messen und basierend darauf ein Intensitätssignal zu erzeugen und auszugeben. Der zumindest eine Sensor 34 weist also eine spektrale Empfindlichkeit in dem vorgegebenen Wellenlängenbereich bzw. bei der vorgegebenen Wellenlänge auf. Der zumindest eine Sensor 34 kann als eine Photodiode oder als Photodioden- oder Pixelarray ausgebildet sein. Das Intensitätssignal ist ein zeitlich variables, eindimensionales Signal. Ein Signal zu einem vorgegebenen Zeitpunkt entspricht der zu diesem Zeitpunkt detektierten Strahlungsintensität.

Das von dem Sensor 34 ausgegebene Intensitätssignal kann ein analoges Signal sein und die Steuereinheit kann eingerichtet sein, um das analoge Signal in ein digitales Signal umzuwandeln.

Gemäß einer Ausführungsform (nicht gezeigt) umfasst das Sensormodul einen ersten Sensor zum Detektieren einer Strahlungsintensität im sichtbaren Wellenlängenbereich entsprechend der Plasmastrahlung, einen zweiten Sensor zum Detektieren einer Strahlungsintensität bei einer Wellenlänge des Bearbeitungslaserstrahls entsprechend der reflektierten Laserstrahlung und einen dritten Sensor zum Detektieren einer Strahlungsintensität in einem infraroten Wellenlängenbereich entsprechend der Temperaturstrahlung, wobei die drei Sensoren entsprechende erste bis dritte Intensitätssignale erzeugen und ausgeben. Um die in das Sensormodul eintretende Prozessstrahlung auf die ersten bis dritten Sensoren zu lenken, kann das Sensormodul mehrere Strahlteiler aufweisen.

Die Steuereinheit ist mit dem Sensormodul 32 verbunden und empfängt das Intensitätssignals des zumindest einen Sensors 34. Die Steuereinheit kann eingerichtet sein, um das Intensitätssignals aufzuzeichnen. Die Steuereinheit 16 ist dazu eingerichtet, das Laserbearbeitungssystem 10, insbesondere das Sensormodul 32, den zumindest einen Sensor 34, die Lichtquelle 42 und/oder den Laserbearbeitungskopf 12, zu steuern, um ein Verfahren zum Vergleichen von Laserbearbeitungssystem und ein Verfahren zum Überwachen eines Laserbearbeitungsprozesses gemäß Ausführungsformen der vorliegenden Offenbarung durchzuführen. Die Steuereinheit ist insbesondere dazu eingerichtet, basierend auf dem Intensitätssignals des zumindest einen Sensors 34 den Laserbearbeitungsprozess zu überwachen und zu regeln.

Nachfolgend wird als Beispiel für den Laserbearbeitungsprozess ein Laserschweißprozess herangezogen. Die vorliegende Offenbarung ist hierauf aber nicht beschränkt. Der Laserbearbeitungsprozess kann auch ein Laserschneidprozess sein.

Bei der Überwachung eines Laserschweißprozesses beim Laserschweißen wird gemäß Ausführungsformen der vorliegenden Offenbarung für gewöhnlich die Höhe und Form des erzeugten Intensitätssignals ausgewertet. Dabei wird während des Laserbearbeitungsprozesses die Strahlungsintensität der Prozessstrahlung durch den zumindest einen Sensor 34 des Sensormoduls 32 in einem vorgegebenen Wellenlängenbereich oder bei einer vorgegebenen Wellenlänge detektiert und es wird ein entsprechendes Intensitätssignal erzeugt.

Anhand des Intensitätssignals und zumindest eines zugehörigen Überwachungsparameters wird der Laserbearbeitungsprozess überwacht. Der Überwachungsparameter kann beispielsweise eine obere Hüllkurve, eine untere Hüllkurve, einen oberen Schwellwert, einen unteren Schwellwert, einen Referenzkurve, etc.. umfassen. Beispielsweise wird das Intensitätssignal mit vorgegebenen Hüllkurven und/oder Schwellwerten verglichen und es wird ein Fehler ausgegebenen, wenn das Intensitätssignal außerhalb der Hüllkurven liegt oder einen Schwellwert über- oder unterschreitet. Das Vergleichen und Ausgeben des Fehlers kann beispielsweise durch die Steuereinheit erfolgen. Beim Laserschweißen wird durch Auswerten der Prozessstrahlung eine qualitative Aussage über die Güte einer Schweißnaht ermöglicht.

Wie zuvor beschrieben werden gemäß einer Ausführungsform ein erstes Intensitätssignal basierend auf einer detektierten Strahlungsintensität der Prozessstrahlung in einem sichtbaren Wellenlängenbereich zur Detektion der Plasmastrahlung, ein zweites Intensitätssignal basierend auf einer detektierten Strahlungsintensität der Prozessstrahlung bei einer Wellenlänge des Bearbeitungslaserstrahls zur Detektion der rückreflektierten Laserstrahlung und ein drittes Intensitätssignal basierend auf einer detektierten Strahlungsintensität der Prozessstrahlung in einem infraroten Wellenlängenbereich der Prozessstrahlung zur Detektion der Temperaturstrahlung erzeugt.

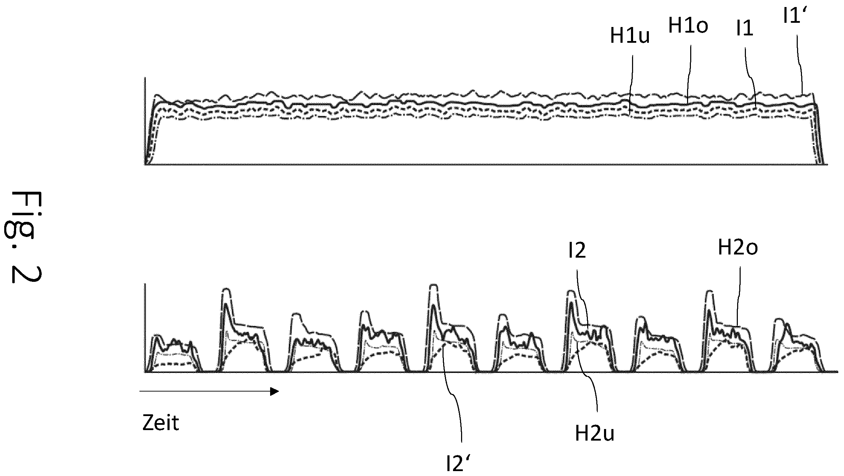

Fig. 2 zeigt einen zeitlichen Verlauf von Intensitätssignalen einer Prozessstrahlung für einen vorgegebenen Laserschweißprozess sowie entsprechende Referenzkurven. Das obere Beispiel zeigt ein Intensitätssignal der Plasmastrahlung bei einer Verschweißung von Edelstahl auf Edelstahl. Das untere Beispiel zeigt ein Intensitätssignal des Rückreflexes bei einer Pulsschweißung von Edelstahl auf Edelstahl. Für eine Überwachung des Laserschweißprozesses, beispielsweise zur Überwachung einer Verschweißung eines Werkstücks, wird die Abweichung der Intensitätssignale zu den Referenzkurven bewertet.

Im oberen Teil von Fig. 2 ist ein Intensitätssignal I1 gezeigt, das bei der Durchführung dieses Laserschweißprozesses durch ein Laserbearbeitungssystem erzeugt wurde. Ferner sind als Referenzkurven obere und untere Hüllkurven H1o, H1u eingezeichnet. Im Fall des Intensitätssignals I1 wird die Signalhöhe des Intensitätssignals I1 mit der Signalhöhe der oberen und unteren Hüllkurven H1o, H1u verglichen und es wird ein Fehler ausgegeben, wenn die Signalhöhe des Intensitätssignals I1 unter der Signalhöhe der unteren Hüllkurve H1u liegt oder darunter abfällt, oder wenn die Signalhöhe des Intensitätssignals I1 über der Signalhöhe der oberen Hüllkurve H1o liegt oder darüber ansteigt. Der letzte Fall ist in Fig. 2 durch das Intensitätssignal 11' veranschaulicht. Zum Vergleich der Signalhöhe kann beispielweise ein zeitlicher Mittelwert des Intensitätssignals I1 mit einem zeitlichen Mittelwert der Hüllkurven H1o, H1u verglichen werden.

Im unteren Teil von Fig. 2 sind ein weiteres Intensitätssignal 12, das ebenfalls bei der Durchführung des Laserschweißprozesses durch das Laserbearbeitungssystem erzeugt wurde. Ferner sind als Referenzkurven obere und untere Hüllkurven H2o, H2u eingezeichnet. Im Fall des Intensitätssignals 12 wird die Signalform des Intensitätssignals 12 mit der Signalhöhe der oberen und unteren Hüllkurven H2o, H2u verglichen und es wird ein Fehler ausgegeben, wenn die Signalform des Intensitätssignals 12 zu stark von der durch die obere und untere Hüllkurven H2o, H2u vorgegebenen Signalform abweicht. Dieser Fall ist in Fig. 2 durch das Intensitätssignal 12' veranschaulicht.

Zum Vergleich der Signalformen können sogenannte Referenz-Parameter verwendet werden. Ein möglicher Referenz-Parameter ist das Integral unter der Signalkurve. Weichen das Integral der Referenzkurve und das der aktuell erfassten Signalkurve voneinander ab, kann ein Fehler ausgegeben werden. Ein weiteres Beispiel für einen Referenz-Parameter ist der 'Flächenfehler'. Dieser wird bestimmt durch die Fläche, die zwischen der aktuell erfassten Signalkurve und den Referenzkurven entsteht. Sie ist damit ein Maß, an welchen Stellen und wie weit die aktuell erfasste Signalkurve außerhalb der Referenzkurven liegt.

Die Erfinder haben erkannt, dass die spektrale Verteilung der detektierten Strahlungsintensität der Prozessstrahlung, die vom Sensor 34 detektiert wird, maßgeblich abhängig ist von den Strahlführungseigenschaften der Strahlführungsoptiken des Laserbearbeitungskopfes 12 und des Sensormoduls 32, die die Prozessstrahlung führen, und den Detektionseigenschaften des Sensors 34.

Die Strahlführungsoptiken unterliegen gewissen Herstellungstoleranzen oder Qualitätsschwankungen. Zudem können die Strahlführungsoptiken mit der Zeit altern und verschmutzen. Auch der Sensor unterliegt Herstellungstoleranzen, Alterungseinflüssen und Verschmutzung. Demnach können sich die Reflexions- bzw. Transmissionsspektren der Strahlführungsoptiken und die spektrale Empfindlichkeit des Sensors selbst bei baugleichen Elementen unterscheiden und sich mit der Zeit verändern. Folglich kann sich die detektierte Strahlungsintensität der Prozessstrahlung bei der vorgegebenen Wellenlänge bzw. in den vorgegebenen Wellenlängenbereichen und damit die Höhe des entsprechenden Intensitätssignals zwischen baugleichen Laserbearbeitungssystemen oder bei demselben Laserbearbeitungssystem zwischen unterschiedlichen Zeitpunkten unterscheiden. Dabei können bereits kleine Unterschiede bei zwei baugleichen Strahlführungsoptiken bzw. Sensoren zu signifikanten Änderungen in der Signalhöhe und -form führen.

Diese Einflüsse der Strahlführungsoptiken und des Sensors führen zu großen Unterschieden in den erzeugten Intensitätssignalen. Insbesondere können sich die Signalhöhe und die Signalform der erzeugten Intensitätssignale unterscheiden und mit der Zeit ändern. Dadurch wiederum wird die Vergleichbarkeit der Intensitätssignale von Anlage zu Anlage erschwert. Außerdem kann die Erkennung von Fehlern bei den überwachten Laserbearbeitungsprozessen nicht mehr sichergestellt werden. Speziell in der industriellen Serienfertigung kommen in der Regel mehrere baugleiche Anlagen zum Einsatz. Hier ist die Vergleichbarkeit der baugleichen Anlagen also von besonderer Bedeutung.

Auf der anderen Seite haben die Prozessparameter eines vorgegebenen Laserbearbeitungsprozesses, beispielsweise Laserparameter wie Laserleistung etc., oder Anlagenparameter, d.h. Parameter von mechanischen Komponenten des Laserbearbeitungssystems bzw. der Laserbearbeitungsanlage, z.B. eines den Laserbearbeitungskopf führenden Roboterarms, ebenfalls starken Einfluss auf die detektierte Strahlungsleistung und damit auf die erzeugten Intensitätssignale. Beispielsweise können durch Unterschiede in der Positionierung oder der Größe von solchen Komponenten die Signalintensitäten, also die Werte der Intensitätssignale, von Anlage zu Anlage abweichen, da dies einen Einfluss auf die zurückgestreute Strahlungsleistung des Lasers haben. Demnach ist es wichtig, den oben genannten Einfluss der Strahlführungs- und Detektionseigenschaften des Laserbearbeitungssystems vom Einfluss der Prozessparameter unterscheiden zu können.

Insgesamt spielt also die Vergleichbarkeit der erzeugten Intensitätssignale für die Vergleichbarkeit baugleicher Anlagen untereinander und für die Qualität der Prozessüberwachung, also bei der Auswertung der Intensitätssignale, eine große Rolle. Es ist daher notwendig, die Strahlführungs- und Detektionseigenschaften von Laserbearbeitungssystemen auswerten und vergleichen zu können.

Gemäß der vorliegenden Offenbarung wird daher zur Inspektion eine Lichtquelle 42 verwendet (siehe Fig. 1). Die Lichtquelle 42 kann Teil des Laserbearbeitungssystems 10 sein.

Die Lichtquelle 42 ist außerhalb des Laserbearbeitungskopfes 12 angeordnet und kann beispielsweise an einem Werkstück 24 oder einer Halterung an einer vorgegebenen Position angeordnet sein, die einer Bearbeitungsposition bzw. einem Bearbeitungsbereich eines vorgegebenen Laserbearbeitungsprozesses entspricht. Die vorliegende Offenbarung ist hierauf aber nicht beschränkt. Die Lichtquelle 42 ist vorzugsweise fest installiert. Weiter vorzugsweise emittiert die Lichtquelle 42 Strahlung oder Licht mit einem Spektrum, das dem Spektrum der Prozessstrahlung eines Laserbearbeitungsprozesses entspricht oder dieses umfasst. Die Lichtquelle 42 emittiert vorzugsweise Licht im sichtbaren Wellenlängenbereich entsprechend der Plasmastrahlung, im infraroten Wellenlängenbereich entsprechend der Temperaturstrahlung und bei einer Wellenlänge des Bearbeitungslaserstrahls.

Die Lichtquelle 42 ist beispielsweise als breitbandige LED oder Halogenlampe ausgebildet und ist vorzugweise eine stabilisierte oder geregelte Lichtquelle. Die Regelung kann durch die Steuereinheit des Laserbearbeitungssystems 10 oder durch eine separate Steuerungseinheit erfolgen. Die Regelung umfasst das Überwachen der Emissionseigenschaften der Lichtquelle 42 wie das Emissionsspektrum und die Abstrahlcharakteristik und das Regeln der Lichtquelle 42, sodass die Emissionseigenschaften der Lichtquelle 42 konstant und damit stabil gehalten werden. Dadurch wird sichergestellt, dass sich die Emissionseigenschaften nicht aufgrund von Umgebungsbedingungen wie Temperatur etc. oder durch Alterung der Lichtquelle ungewollt variieren. Dadurch wiederum kann sichergestellt werden, dass die Emissionseigenschaften der Lichtquelle 42 keinen Einfluss auf die Auswertung der Strahlführungs- und Detektionseigenschaften des Laserbearbeitungssystem 10 haben. Zu den Emissionseigenschaften zählen insbesondere das Emissionsspektrum, also die spektrale Verteilung der emittierten Strahlungsintensität, und die Abstrahlcharakteristik, also die Winkelverteilung der emittierten Strahlung.

Damit die Emissionseigenschaften der Lichtquelle 42 über die Lebensdauer der Lichtquelle 42 konstant sind und nicht von Temperaturänderungen beeinflusst werden, und damit insbesondere die emittierte Strahlungsintensität konstant ist, kann eine Regelungsschaltung vorgesehen werden. Die Regelungsschaltung kann durch die Steuereinheit implementiert sein. Die Regelungsschaltung kann derart ausgebildet sein, dass sie einen Ansteuerstrom der Lichtquelle 42 erhöht, wenn der Wirkungsgrad der Lichtquelle 42 sinkt, um die emittierte Strahlungsintensität auf einem konstanten Pegel zu halten. Beispielsweise wird als Lichtquelle 42 eine LED verwendet und die Regelungsschaltung umfasst eine Photodiode zum Detektierten der von der LED emittierten Strahlungsintensität. Die Photodiode ist mit einer Verstärkerschaltung der Regelungsschaltung verbunden. Der Ansteuerstrom der LED wird in Abhängigkeit von der detektierten Strahlungsintensität eingestellt. Wenn die detektiere Strahlungsintensität sinkt, wird der Ansteuerstrom der LED erhöht. Zum Detektieren der Strahlungsintensität der LED durch die Photodiode umfasst die Regelungsschaltung ferner einen teildurchlässigen Spiegel, durch den ein Teil der von der LED emittierten Strahlungsintensität auf die Photodiode umgelenkt wird. Die Photodiode kann einen Strom basierend auf der detektierten Strahlungsintensität ausgeben. Ein Operationsverstärker der Verstärkerschaltung kann mit der Photodiode verbunden sein und als Spannungswandler dienen. Der Operationsverstärker und die Photodiode können als ein einzelnes Bauteil ausgebildet sein.

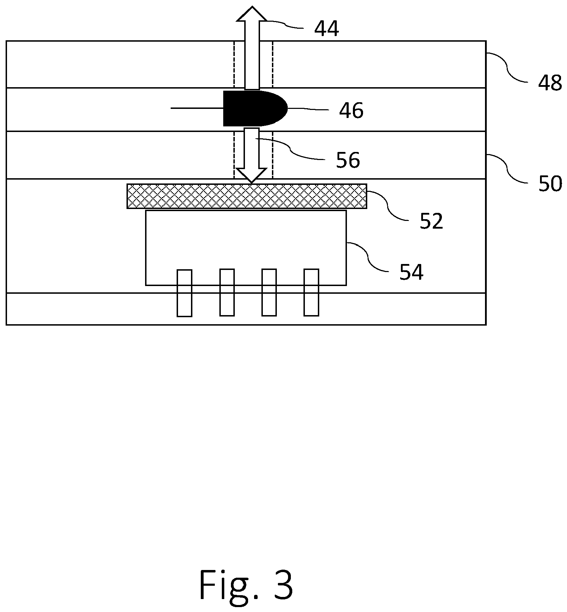

Fig. 3 zeigt eine Lichtquelle gemäß Ausführungsformen der vorliegenden Erfindung.

Die Lichtquelle 42 umfasst eine Halogenlampe 46, die zwischen einer ersten Blende 48 und einer zweiten Blende 50 angeordnet ist. Die erste Blende 48 kann über der Halogenlampe 46 angeordnet sein, und die zweite Blende 50 kann unter der Halogenlampe 46 angeordnet sein, die vorliegende Offenbarung ist hierauf aber nicht beschränkt.

Auf der der Leuchtdiode 42 abgewandten Seite der zweiten Blende 50 ist vorzugsweise ein Filter 52 angeordnet. Der Filter 52 weist eine Transmissivität von 50% der von der Halogenlampe 46 emittierten Strahlung auf. Die vorliegende Offenbarung ist hierauf aber nicht beschränkt. Der Filter 52 kann eine andere Transmissiviät aufweisen oder weggelassen sein. Ferner umfasst die Lichtquelle 42 eine Photodiode 54 mit einem Operationsverstärker, die auf der der Leuchtdiode 42 abgewandten Seite der zweiten Blende 50 bzw. auf der der zweiten Blende 50 abgewandten Seite des Filters 52 angeordnet sind. Die zweite Blende 50 begrenzt den Anteil der emittierten Strahlung 56, der von der Lichtquelle 42 zur Photodiode 54 gelangt.

Auf der der Leuchtdiode 42 abgewandten Seite der ersten Blende 48 ist der Laserbearbeitungskopf 12 (siehe Fig. 1) angeordnet. Die erste Blende 48 begrenzt den Anteil der emittierten Strahlung 44, die von der Lichtquelle 42 in Richtung des Laserbearbeitungskopfes 12 gelangt und vom Sensor 34 detektiert wird.

Durch Bereitstellen der Lichtquelle 42 muss kein Laserbearbeitungsprozess zum Erzeugen von Prozessstrahlung zum Auswerten der Strahlführungs- und Detektionseigenschaften durchgeführt werden. Zudem bietet die (stabilisierte) Lichtquelle 42 den Vorteil, eine Basis oder konstanten Abgleich für das Vergleichen der Laserbearbeitungssysteme 10 bereitzustellen. Das Vergleichen ist unabhängig von den oben genannten Einflussfaktoren wie die Prozessparameter oder Laserparameter einer Laserstrahlquelle.

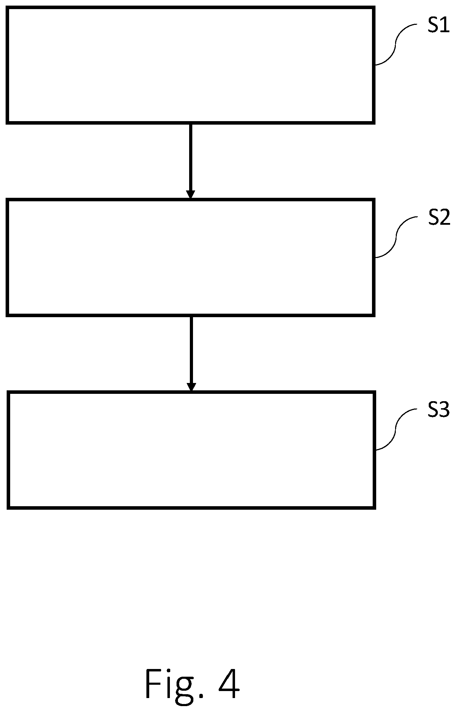

Fig. 4 zeigt ein Flussdiagramm eines Verfahrens zum Vergleichen von Laserbearbeitungssystemen gemäß Ausführungsformen. Das Verfahren kann durch das mit Bezug auf Fig. 1 beschriebene Laserbearbeitungssystem 10 durchgeführt werden.

Das Verfahren zum Vergleichen von Laserbearbeitungssystemen umfasst als ersten Schritt (S1) das Detektieren durch den Sensor 34 von Strahlung 44, die von der Lichtquelle 42 emittiert wird, in einem vorgegebenen Wellenlängenbereich oder bei einer vorgegebenen Wellenlänge und das Erzeugen eines entsprechenden Intensitätssignals.

Die Strahlung 44 verläuft von der Lichtquelle 42 zum Sensor 34 durch den Laserbearbeitungskopf 12 und das Sensormodul 32.

Beim Verlauf der Strahlung 44 durch den Laserbearbeitungskopf 12 bzw. durch das Sensormodul 32 wird die von der Lichtquelle 42 emittierte Strahlung 44 ebenso wie die Prozessstrahlung von zumindest einer Strahlführungsoptik des Laserbearbeitungskopfes 12, beispielsweise die Ablenkeinheit 28, der Strahlteiler 24, die Fokussieroptik 30, und von zumindest einer Strahlführungsoptik des Sensormoduls 32, beispielsweise die Fokussieroptik 36, geführt. Wie zuvor mit Bezug auf die Prozessstrahlung diskutiert wird auch die spektrale Verteilung der detektierten Strahlungsintensität der Strahlung 44 durch die Strahlführungseigenschaften der Strahlführungsoptiken des Laserbearbeitungskopfes 12 und des Sensormoduls 32 und durch den Sensor 34 des Sensormoduls 32 beeinflusst.

Das Verfahren umfasst ferner das Ausrichten des Laserbearbeitungskopfes 12 und der Lichtquelle 42 zueinander, sodass die von dem Senor 34 detektierte Strahlungsintensität und damit das entsprechende Intensitätssignal einen Maximalwert annimmt (S3).

Zusätzlich können zunächst das Sensormodul 34 und der Laserbearbeitungskopf 12 relativ zueinander ausgerichtet werden. Beispielsweise kann eine optische Achse des Sensormoduls 34 zu einer optischen Achse des optischen Ausgangs 38 des Laserbearbeitungskopfes 12 ausgerichtet werden. Insbesondere kann die optische Achse des optischen Eingangs 40 des Sensormoduls 32 zu der optischen Achse des optischen Ausgangs 38 des Laserbearbeitungskopfes 12 ausgerichtet werden, sodass die optische Achse des optischen Eingangs 40 des Sensormoduls 32 mit der optischen Achse des optischen Ausgangs 38 des Laserbearbeitungskopfes 12 zusammenfällt.

Anschließend können der Laserbearbeitungskopf 12 und die Lichtquelle 42 zueinander ausgerichtet werden, um das Maximum des Intensitätssignal zu detektieren. Dazu können der Laserbearbeitungskopf 12 und die Lichtquelle 42 so zueinander ausgerichtet werden, dass ein Mittelpunkt der Lichtquelle 42 auf einer optischen Achse des Laserbearbeitungskopfes 12 liegt. Insbesondere kann der Mittelpunkt der Lichtquelle 42 auf der optischen Achse der Fokussieroptik 30 liegen. Zudem kann das Ausrichten derart erfolgen, dass eine Mittelachse der Lichtquelle 42 mit der optischen Achse des Laserbearbeitungskopfes, insbesondere mit der optischen Achse der Fokussieroptik 30, zusammenfällt.

Das Ausrichten kann ferner derart erfolgen, dass der Mittelpunkt der Lichtquelle 42 in einem Fokus der Fokussieroptik 30 des Laserbearbeitungskopfes 12 bzw. der Fokussieroptik 36 des Sensormoduls 32 liegt.

Dazu kann beispielsweise der Laserbearbeitungskopf 12 und/oder die Lichtquelle 42 sowohl in einer Ebene senkrecht zur optischen Achse der Fokussieroptik 30 als auch entlang der optischen Achse der Fokussieroptik 30 bewegt werden. Es kann ferner ein Abstand zwischen dem Laserbearbeitungskopf 12 und der Lichtquelle 42 eingestellt werden und eine Orientierung zwischen dem Laserbearbeitungskopfes 12 und der Lichtquelle 42 kann eingestellt werden. Beispielsweise können der Laserbearbeitungskopf 12 und die Lichtquelle 42 zueinander verkippt werden. Diese Einstellmöglichkeiten sind in Fig. 1 durch die Doppelpfeile 58 veranschaulicht.

Ferner kann der Sensor 34 des Sensormoduls 32 derart ausgerichtet werden, dass die in das Sensormodul 32 eingekoppelte und auf den Sensor 34 fokussierte Strahlung 44 im Wesentlichen vollständig vom Sensor 34 detektiert wird. Dazu kann der Sensor 34 derart ausgerichtet werden, dass ein Mittelpunkt des Sensors 34 auf der optischen Achse der Fokussieroptik 36 liegt, und dass eine Mittelachse des Sensors 34 mit der optischen Achse der Fokussieroptik 36 zusammenfällt. Dazu kann der Sensor 34 sowohl in einer Ebene senkrecht zur als auch entlang der optischen Achse der Fokussieroptik 36 bewegt werden. Dies ist in Fig. 1 durch die Doppelpfeile 60 veranschaulicht.

Gemäß Ausführungsformen ist die Lichtquelle 42 fest installiert. In diesem Fall erfolgt das Ausrichten lediglich durch Bewegen des Laserbearbeitungskopfes 12 zusammen mit dem daran befestigten Sensormodul 32.

Durch das Ausrichten des Laserbearbeitungskopfes 12 und der Lichtquelle 42 zueinander soll sichergestellt werden, dass ein Maximum der Strahlungsintensität der emittierten Strahlung in den Laserbearbeitungskopf 12 bzw. in das Sensormodul 32 eintritt, sodass das Intensitätssignal einen Maximalwert annimmt.

Gemäß der zuvor beschriebenen Ausführungsform werden erste bis dritte Intensitätssignale erzeugt. In diesem Fall kann das Ausrichten des Laserbearbeitungskopfes 12 und der Lichtquelle 42 zueinander derart erfolgen, dass zumindest eines der ersten bis dritten Intensitätssignale einen Maximalwert annimmt.

Gemäß der vorliegenden Offenbarung erfolgt die Signalaufnahme also nach einer exakten Ausrichtung der Lichtquelle 42 zur optischen Achse. Dabei wird ein Zentrum der Lichtquelle 42 zur optischen Achse so ausgerichtet, dass ein Maximum der Intensitätssignale im Plasma, Temperatur und Rückreflex erreicht wird.

Als letzten Schritt umfasst das Verfahren das Vergleichen des Intensitätssignals mit einem vorgegebenen Referenzwert (S3). Beispielsweise kann ein zeitlicher Mittelwert des erzeugten Intensitätssignals mit einem Referenzwert verglichen werden. Alternativ oder zusätzlich kann der Maximalwert des Intensitätssignals mit dem Referenzwert verglichen werden. Gemäß Ausführungsformen ist der Referenzwert ein Mittelwert bzw. ein Maximalwert eines Intensitätssignal, das durch die zuvor beschriebenen Schritte S1, S2 für ein Referenz-Laserbearbeitungssystem bestimmt wurden, wobei das Referenz-Laserbearbeitungssystem mit dem betrachteten Laserbearbeitungssystem baugleich ist.

Durch das Detektierten von Strahlung einer Lichtquelle, durch das Ausrichten des Laserbearbeitungskopfes zur Lichtquelle, sodass das Intensitätssignal einen Maximalwert annimmt, und durch das Vergleichen des Intensitätssignals mit Referenzwerten wird eine Vergleichbarkeit von baugleichen Laserbearbeitungssystemen ermöglicht. Dabei ist die Durchführung eines Laserbearbeitungsprozesses nicht erforderlich.

Zum einen können die Schritte S1-S3 ein erstes Mal mit einem ersten Laserbearbeitungssystem durchgeführt werden, und die Schritte S1-S3 können mit einem zweiten, zum ersten Laserbearbeitungssystem baugleichen Laserbearbeitungssystem durchgeführt werden. Dabei werden die jeweiligen Intensitätssignale für jedes der baugleichen Laserbearbeitungssysteme mit denselben Referenzwerten verglichen. Baugleiche Laserbearbeitungssysteme bedeutet in diesem Fall, dass die Laserbearbeitungssysteme baugleiche Laserbearbeitungsköpfe und baugleiche Sensormodule aufweisen. Anhand der aus dem Vergleich resultierenden Ergebnisse kann dann in einem weiteren Schritt entschieden werden, ob beispielsweise mechanische oder optische Änderungen am Aufbau, beispielsweise ein Austausch oder eine veränderte Position von optischen oder mechanischen Komponenten, von zumindest einem der Laserbearbeitungssysteme notwendig sind, und/oder eine Anpassung von Parametern in einer Steuerungs- oder Überwachungssoftware der Steuereinheit, beispielsweise kleinere Offsets zur Kompensation unterschiedlicher Signalhöhen der Intensitätssignale, vorgesehen werden müssen, um so die Vergleichbarkeit der baugleichen Laserbearbeitungssysteme 10 untereinander zu gewährleisten.

Beispielsweise können die Schritte S1-S3 mit zumindest zwei baugleichen Laserbearbeitungsköpfen und mit demselben Sensormodul und derselben Lichtquelle durchgeführt werden. Dabei kann das Sensormodul nacheinander an die zumindest zwei baugleichen Laserbearbeitungsköpfe montiert werden. Dadurch können Strahlführungseigenschaften der optischen Elemente mehrerer baugleicher Laserbearbeitungsköpfe miteinander verglichen werden. Hierbei werden die Einflüsse auf die Strahlführungs- und Detektionseigenschaften verschiedener Sensormodule auf die detektierte Strahlungsintensität und damit das erzeugte Intensitätssignal ausgeblendet.

Alternativ oder zusätzlich können die Schritte S1-S3 mit demselben Laserbearbeitungskopf und derselben Lichtquelle und mit zumindest zwei baugleichen Sensormodulen durchgeführt. Dadurch können die Detektions- und Strahlführungseigenschaften mehrerer baugleicher Sensormodule verglichen werden. Hierbei werden die Einflüsse auf die Strahlführungs- und Detektionseigenschaften der Sensormodule durch baugleiche Laserbearbeitungsköpfe auf die detektierte Strahlungsintensität und damit das erzeugte Intensitätssignal ausgeschaltet. Dieses Vorgehen kann beispielsweise bei einem Austausch eines Sensormoduls an einem Laserbearbeitungskopfs mit einem baugleichen Sensormodul sinnvoll sein, um die erzeugten Intensitätssignale zwischen den baugleichen Sensormodulen vergleichen zu können.

Alternativ oder zusätzlich können die Schritte S1-S3 auch mit demselben Laserbearbeitungskopf, mit demselben Sensormodul und derselben Lichtquelle mehrmals durchgeführt werden und/oder können mit einem vorgegebenen Zeitabstand wiederholt werden. Dadurch können Eigenschaften dieses Laserbearbeitungssystems, insbesondere dessen Strahlführungs- und/oder Detektionseigenschaften, zu verschiedenen Zeitpunkten verglichen werden. Somit kann eine Alterung und/oder Verschmutzung der Strahlführungsoptiken, beispielsweise des Schutzglases 31 von Fig. 1, und/oder des Sensors erkannt werden. Beispielsweise kann das Verfahren bei der Inbetriebnahme und/oder Wartung des Laserbearbeitungssystems und/oder nach dem Austausch von zumindest einer Komponente des Laserbearbeitungssystems durchgeführt wird. Die zumindest eine Komponente des Laserbearbeitungssystems kann beispielsweise die Laserquelle, das Sensormodul, der Sensor des Sensormoduls, eine Strahlführungsoptik des Laserbearbeitungskopfes, beispielsweise das in Fig. 1 gezeigte Fokussieroptik 30 oder das Schutzglas 31, oder eine Strahlführungsoptik des Sensormoduls, beispielsweise die in Fig. 1 gezeigte Fokussieroptik 36, sein.

Zudem ist der Abgleich des Intensitätssignals an einen Laserbearbeitungssystem als Qualitätscheck vor dem Start eines Laserbearbeitungsprozesses und damit dem Start der Detektion der Prozessstrahlung sinnvoll. Dadurch können beispielsweise größere Beschädigungen oder Änderungen, beispielsweise kontaminierte Schutzgläser o.ä. festgestellt werden. Anhand des bei Inbetriebnahme des Laserbearbeitungssystems erzeugten Intensitätssignals kann bestimmt werden, ob das Maximum des Intensitätssignals bei unveränderten Soft-/ Hardwareeinstellungen in der Software erreicht werden kann. Bei der Inbetriebnahme durch einen Techniker vor Ort beim Kunden können mithilfe des Verfahrens und der Lichtquelle beliebige Laserbearbeitungssysteme, die im sichtbaren bis zum NIR-Wellenlängenbereich arbeiten, prozessunabhängig geprüft werden.

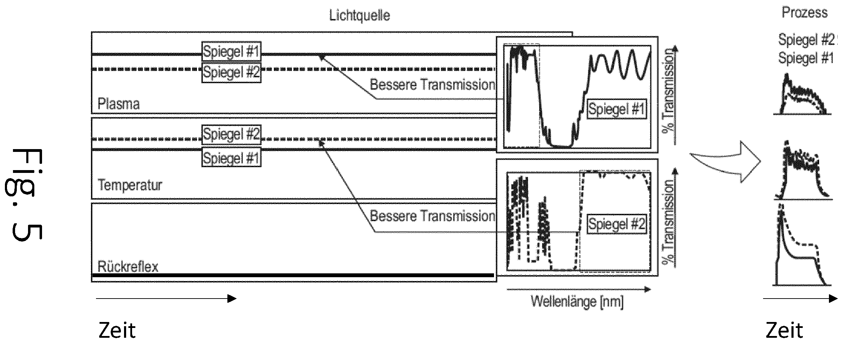

Fig. 5 zeigt Intensitätssignale, die mithilfe des Verfahrens gemäß Ausführungsformen der vorliegenden Offenbarung erzeugt wurden, und Intensitätssignale, die bei der Überwachung eines Laserbearbeitungsprozesses aufgezeichnet wurden.

Auf der linken Seite von Fig. 5 sind erste bis dritte Intensitätssignale basierend auf einer erfassten Strahlungsintensität im sichtbaren Wellenlängenbereich entsprechend einer Plasmastrahlung ("Plasma"), basierend auf einer erfassten Strahlungsintensität bei einer Wellenlänge des Bearbeitungslaserstrahls ("Rückreflex") und basierend auf einer erfassten Wellenlänge im infraroten Wellenlängenbereich entsprechend einer Temperaturstrahlung ("Temperatur") dargestellt, die anhand der zuvor beschriebenen Schritte S1-S3 erhalten wurden ("Lichtquelle").

Die ersten bis dritten Intensitätssignale wurden für zwei baugleiche Exemplare des Laserbearbeitungssystems 10 von Fig. 1 durch entsprechende Sensoren des Sensormoduls aufgezeichnet. Die zwei baugleichen Exemplare des Laserbearbeitungssystem haben zwei baugleiche Strahlteiler 26 "Spiegel #1", "Spiegel #2" eingebaut. Wie zu erkennen ist, haben die beiden Strahlteiler 26 aber leicht unterschiedliche Transmissionsspektren oder -kurven (Diagramme "Wellenlänge", "Transmission"). Beispielsweise ist die Transmissivität des Strahlteilers "Spiegel #1" im sichtbaren Wellenlängenbereich größer als die des Strahlteilers "Spiegel #2" und die Transmissivität des Strahlteilers "Spiegel #2" im infraroten Wellenlängenbereich ist größer als die des Strahlteilers "Spiegel #1".

Demnach ist ein Signalpegel des Intensitätssignals "Plasma" für das Laserbearbeitungssystem mit dem Strahlteiler Spiegel #1 größer als ein Signalpegel des Intensitätssignals "Plasma" für das Laserbearbeitungssystem mit dem Strahlteiler "Spiegel #2". Umgekehrt ist ein Signalpegel des Intensitätssignals "Temperatur" für das Laserbearbeitungssystem mit dem Strahlteiler Spiegel #2 größer als ein Signalpegel des Intensitätssignals "Temperatur" für das Laserbearbeitungssystem mit dem Strahlteiler "Spiegel #1". Die unterschiedlichen Transmissionskurven der ansonsten baugleichen Strahlteiler zeigen signifikanten Änderungen im Signalpegel der jeweiligen Intensitätssignale.

Diese Unterschiede, die durch das Verfahren mit der Lichtquelle aufgezeichnet werden, zeigen sich auch in einem typischen Laserschweißprozess, wie in Fig. 5 auf der rechten Seite veranschaulicht ist ("Prozess"). Demnach haben die Unterschiede oder Toleranzen der ansonsten baugleichen Strahlteiler auch Auswirkungen auf die während des Laserschweißprozesses erfasste Strahlungsintensität, und damit auch auf die erzeugten Intensitätssignale. Werden die Unterschiede bei den Intensitätssignalen der beiden baugleichen Laserbearbeitungssysteme nicht berücksichtigt oder korrigiert, kann dies zu Fehlern in der Überwachung der Laserschweißprozesse führen.

Das oben beschriebene Verfahren ermöglicht es ferner, anschließend einen Skalierungsfaktor für einen vorgegebenen Laserbearbeitungskopf und einen vorgegebenen Sensor eines vorgegebenes Sensormodul zu bestimmen. Der Skalierungsfaktor kann dann in der Überwachungssoftware abgespeichert werden. Der Skalierungsfaktor ermöglicht es, die Signalhöhe eines Intensitätssignals, das bei einem Laserbearbeitungsprozess basierend auf der detektierten Strahlungsintensität auf einen vorgegebenen Wert oder ein vorgegebenes Signalniveau einzustellen. Wird das Verfahren bei einem Sensortausch an demselben Laserbearbeitungssystem wiederholt, kann dadurch sichergestellt werden, dass die Signalhöhen der einzelnen Sensoren vergleichbar sind und somit die Parametrierung der Software entfällt bzw. deutlich einfacher wird.

Der Skalierungsfaktor kann durch Dividieren des zeitlichen Mittelwerts oder des Maximalwerts des in den Schritten S1-S3 erzeugten Intensitätssignals durch den entsprechenden Referenzwert bestimmt werden.

Das Laserbearbeitungssystem ist gemäß Ausführungsformen eingerichtet, um das bei der Überwachung eines Laserbearbeitungsprozesses erzeugte Intensitätssignal unter Verwendung des so bestimmten Skalierungsfaktors zu skalieren und den Laserbearbeitungsprozess wie zuvor beschrieben anhand des skalierten Intensitätssignals zu überwachen. Das Skalieren des Intensitätssignals kann ein Dividieren des Intensitätssignals durch den Skalierungsfaktor umfassen.

Durch das Skalieren des Intensitätssignals können zur Überwachung eines identischen Laserbearbeitungsprozesses dieselben Überwachungsparameter bzw. dasselbe Überwachungsverfahren bzw. -programm an allen der baugleichen Laserbearbeitungssysteme verwendet werden. Insbesondere kann die Überwachung des Laserbearbeitungsprozesses basierend auf Überwachungsparametern erfolgen, die für ein anderes Laserbearbeitungssystem ermittelt wurden, das zu dem betrachteten Laserbearbeitungssystem baugleich ist, oder die für ein baugleiches Referenz-Laserbearbeitungssystem ermittelt wurden. Die Überwachung des Laserbearbeitungsprozesses kann insbesondere basierend auf Überwachungsparametern, die für das Referenz-Laserbearbeitungssystem bestimmt wurden, durchgeführt werden.

Wenn das vorgegebene Sensormodul gemäß der zuvor beschriebenen Ausführungsform erste bis dritte Sensoren umfasst, können drei entsprechende Skalierungsfaktoren bestimmt werden. Beispielsweise kann ein erster Skalierungsfaktor für den ersten Sensor, ein zweiter Skalierungsfaktor für den zweiten Sensor ein dritter Skalierungsfaktor für den dritten Sensor bestimmt werden.

In der vorliegenden Offenbarung wird für eine Maschinenqualitätsinspektion bzw. für eine Inspektion von diodenbasierten Sensorsystemen ein Verfahren angegeben, bei dem unter Verwendung einer Lichtquelle, vorzugsweise einer stabilisierten Lichtquelle, und einem photodiodenbasierten Sensormodul die Strahlführungseigenschaften, insbesondere Transmissions- und/oder Reflexionseigenschaften, eines Laserbearbeitungssystems, d.h. des Laserbearbeitungskopfs und/oder des Sensormoduls, aufgenommen und bewertet werden können. Basierend auf dem hierin offenbarten Prinzip kann insbesondere festgestellt und gezeigt werden, ob Prozessstrahlung, die zur Überwachung eines Laserbearbeitungsprozesses, beispielsweise eines Laserschweißprozesses, benötigt wird, in betrachteten Wellenlängenbereichen vorhanden ist und wie hoch die Anteile der Prozessstrahlung in den jeweiligen Wellenlängenbereichen ist. Ferner kann festgestellt werden, ob die Vergleichbarkeit zu baugleichen Anlagen gewährleistet ist. Die betrachteten Wellenlängenbereiche können insbesondere folgende zur Fehlererkennung relevante Wellenlängenbereiche umfassen: ein sichtbarer Wellenlängenbereich zur Detektion von Plasmastrahlung, ein (N)IR-Wellenlängenbereich zur Detektion von Temperaturstrahlung und ein Wellenlängenbereich, der die Wellenlänge des Bearbeitungslaserstrahls umfasst, zur Detektion von Laserstrahlung, die von einem Werkstück zurückreflektiert wurde.

## Patentansprüche

1. Verfahren zum Vergleichen von Laserbearbeitungssystemen (10), wobei ein Laserbearbeitungssystem (10) einen Laserbearbeitungskopf (12) und ein Sensormodul (32) mit zumindest einer Photodiode (34) zum Erfassen von Prozessstrahlung umfasst, das Verfahren umfassend:
- Detektieren von Strahlung, die von einer Lichtquelle (42) emittiert wird, durch die Photodiode (34) und Erzeugen eines entsprechenden Intensitätssignals, wobei die Strahlung von der Lichtquelle (42) zur Photodiode (34) von zumindest einem optischen Element (26, 28, 30) im Laserbearbeitungskopf (12) und/oder von zumindest einem optischen Element (36) des Sensormoduls (32) geführt wird;
- Ausrichten des Laserbearbeitungskopfes (12) und der Lichtquelle (42) zueinander, sodass das Intensitätssignal einen Maximalwert annimmt; und
- Vergleichen des Intensitätssignals mit zumindest einem vorgegebenen Referenzwert.

2. Verfahren nach Anspruch 1, wobei die Lichtquelle (42) eine stabilisierte und/oder regelbare und/oder steuerbare Lichtquelle ist.

3. Verfahren nach Anspruch 1 oder 2, wobei ein Strahlverlauf der detektierten Strahlung zumindest abschnittsweise überlappend und/oder koaxial mit einem Strahlverlauf eines Bearbeitungslaserstrahls im Laserbearbeitungskopf (12) ist.

4. Verfahren nach einem der vorstehenden Ansprüche, wobei die Lichtquelle (42) zumindest eine der folgenden ist oder umfasst: eine elektrische Lichtquelle, eine Halogenlampe, eine Leuchtdiode, und eine breitbandige Lichtquelle, insbesondere eine Lichtquelle mit einem Emissionsspektrum zwischen 350 nm und 2000 nm.

5. Verfahren nach einem der vorstehenden Ansprüche, wobei das Detektieren der Strahlung das Detektieren einer Strahlungsintensität der Strahlung durch die zumindest eine Photodiode (34) in einem vorgegebenen Wellenlängenbereich und/oder bei einer vorgegebenen Wellenlänge umfasst.

6. Verfahren nach Anspruch 5, wobei der vorgegebene Wellenlängenbereich einer der folgenden Wellenlängenbereiche ist oder umfasst: einen sichtbaren Wellenlängenbereich, einen Nahinfrarot (NIR)-Wellenbereich, einen infraroten Wellenlängenbereich, einen Wellenlängenbereich einer Temperaturstrahlung, einen Wellenlängenbereich einer Plasmastrahlung, Wellenlängen zwischen 350 nm und 780 nm, Wellenlängen zwischen 780 nm und 3 µm, Wellenlängen größer als 1 µm, und/oder
wobei die vorgegebene Wellenlänge eine Wellenlänge eines Bearbeitungslaserstrahls des Laserbearbeitungssystems, insbesondere 1064 nm, ist.

7. Verfahren nach einem der vorstehenden Ansprüche, wobei eine Strahlungsintensität der Strahlung durch eine erste Photodiode in einem sichtbaren Wellenlängenbereich detektiert wird und darauf basierend ein erstes Intensitätssignal erzeugt wird, und/oder wobei eine Strahlungsintensität der Strahlung durch eine zweite Photodiode bei einer Wellenlänge eines Bearbeitungslaserstrahls des Laserbearbeitungssystems (10) detektiert wird und darauf basierend ein zweites Intensitätssignal erzeugt wird, und/oder wobei eine Strahlungsintensität der Strahlung durch eine dritte Photodiode in einem infraroten Wellenlängenbereich detektiert wird und darauf basierend ein drittes Intensitätssignal erzeugt wird.

8. Verfahren nach einem der vorstehenden Ansprüche, wobei das optische Element (26, 28, 30, 31, 36) eines der folgenden ist oder umfasst: ein transmissives Element, ein reflektives Element, ein Schutzglas (31), ein Strahlteiler (26), ein Spiegel, eine Linse, eine Linsengruppe, ein Linsenpaket, eine Fokussierlinse, eine Fokussieroptik (30, 36), eine Kollimatoroptik, eine Kollimatorlinse, und eine Ablenkoptik (28).

9. Verfahren nach einem der vorstehenden Ansprüche, wobei zum Vergleich von Strahlführungseigenschaften mehrerer baugleicher Laserbearbeitungsköpfe (12) alle Schritte mit zumindest zwei baugleichen Laserbearbeitungsköpfen (12) und mit demselben Sensormodul (32) und derselben Lichtquelle (42) durchgeführt werden, und/oder
wobei zum Vergleich von Detektionseigenschaften mehrerer baugleicher Sensormodule (32) alle Schritte mit demselben Laserbearbeitungskopf (12) und derselben Lichtquelle (42) und mit zumindest zwei baugleichen Sensormodulen (32) durchgeführt werden, und/oder
wobei zum Vergleich von Eigenschaften eines Laserbearbeitungssystems (10) zu verschiedenen Zeitpunkten alle Schritte mit demselben Laserbearbeitungskopf (12), mit demselben Sensormodul (32) und derselben Lichtquelle (42) mit einem vorgegebenen Zeitabstand wiederholt werden.

10. Verfahren nach einem der vorstehenden Ansprüche, wobei die Lichtquelle (42) fest installiert ist, und/oder wobei das Ausrichten des Laserbearbeitungskopfes (12) und der Lichtquelle (42) zueinander durch Bewegen des Laserbearbeitungskopfes (12) erfolgt.

11. Verfahren nach einem der vorstehenden Ansprüche, wobei das Vergleichen des Intensitätssignals mit dem zumindest einem Referenzwert umfasst:
- Vergleichen des Mittelwerts und/oder des Maximalwerts des Intensitätssignals mit einem vorgegebenen Referenzwert.

12. Verfahren nach Anspruch 11, wobei basierend auf dem Mittelwert des Intensitätssignals für einen vorgegebenen Laserbearbeitungskopf (12) und eine vorgegebene Photodiode (34) und basierend auf dem Referenzwert ein Skalierungsfaktor für diesen vorgegebenen Laserbearbeitungskopf (12) und diese vorgegebene Photodiode (34) bestimmt wird.

13. Verfahren zum Überwachen eines Laserbearbeitungsprozesses, das Verfahren umfassend:
- Durchführen eines Laserbearbeitungsprozesses zum Bearbeiten von zumindest einem Werkstück (24) durch Einstrahlen eines Bearbeitungslaserstrahls auf das zumindest eine Werkstück (24) durch einen Laserbearbeitungskopf (12);
- Detektieren von Prozessstrahlung des Laserbearbeitungsprozesses durch eine Photodiode (34) eines Sensormoduls (32) in einem vorgegebenen Wellenlängenbereich und Erzeugen eines entsprechenden Intensitätssignals; und
- Skalieren des Intensitätssignals mit einem für diesen den Laserbearbeitungsprozess durchführenden Laserbearbeitungskopf (12) und diese Photodiode (34) bestimmten Skalierungsfaktor, und Überwachen des Laserbearbeitungsprozesses anhand des skalierten Intensitätssignal und anhand von zumindest einem für das Intensitätssignal vorgegebenen Überwachungsparameter, wobei der Skalierungsfaktor nach Anspruch 12 bestimmt ist; oder
- Skalieren von zumindest einen vorgegebenen Überwachungsparameters für das Intensitätssignal mit dem für diesen Laserbearbeitungskopf (12) und diese Photodiode (34) bestimmten Skalierungsfaktor, und Überwachen des Laserbearbeitungsprozesses anhand des Intensitätssignals und anhand des zumindest einen skalierten Überwachungsparameters, wobei der Skalierungsfaktor nach Anspruch 12 bestimmt ist.

14. Verfahren nach Anspruch 13, wobei der zumindest eine Überwachungsparameter für das Intensitätssignal ausgewählt ist aus der Gruppe, die umfasst: eine obere Hüllkurve, eine untere Hüllkurve, einen oberen Schwellwert, einen unteren Schwellwert, einen Referenzverlauf, und/oder einen Mittelwert.

15. Laserbearbeitungssystem (10), umfassend:
- einen Laserbearbeitungskopf (12), eingerichtet zum Einstrahlen eines Bearbeitungslaserstrahls auf zumindest ein Werkstück (24) zum Durchführen eines Laserbearbeitungsprozesses,
- Sensormodul (32) mit zumindest einer Photodiode (34) zum Erfassen einer Intensität einer Prozessstrahlung in einem vorgegebenen Wellenlängenbereich und/oder bei einer vorgegebenen Wellenlänge, und
- eine Steuereinheit, eingerichtet, um ein Verfahren nach Anspruch 13 oder 14 durchzuführen.
